Europäisches Patentamt

(19) European Patent Office

Office européen des brevets

(11) Publication number: **0 106 677**
**B1**

# (12) EUROPEAN PATENT SPECIFICATION

(45) Date of publication of patent specification: **18.07.90**

(21) Application number: **83306208.6**

(22) Date of filing: **13.10.83**

(51) Int. Cl.⁵: **G 01 F 23/28**

(54) **Tank gauging system and methods.**

(30) Priority: **14.10.82 US 434386**

(43) Date of publication of application:
**25.04.84 Bulletin 84/17**

(45) Publication of the grant of the patent:
**18.07.90 Bulletin 90/29**

(84) Designated Contracting States:
**DE FR GB**

(56) References cited:
**DE-B- 878 723**
**GB-A-2 019 568**
**US-A-3 394 589**
**US-A-3 652 978**
**US-A-3 985 030**
**US-A-4 229 798**

(73) Proprietor: **GILBARCO INC.**
**7300 West Friendly Avenue P.O. Box 22087**
**Greensboro North Carolina 27420 (US)**

(72) Inventor: **Haynes, John Spore**
**1610 Milan Drive**
**Greensboro North Carolina 27420 (US)**

(74) Representative: **Stanley, David William et al**
**APPLEYARD LEES & CO. 15 Clare Road**
**Halifax West Yorkshire HX1 2HY (GB)**

Courier Press, Leamington Spa, England.

## Description

The present invention relates to the field of monitoring at least one liquid in a tank, and more particularly though not exclusively to measuring the volume of liquid in a tank and in particular, to making such measurement using ultra sound.

Many liquids, like gasoline, are stored in large underground tanks where the volume of the liquid in the tank cannot be observed directly. The oldest and perhaps the most common way of determining the volume of such liquid is to insert a calibrated rod into the tank and read the height of the liquid from the line formed on the rod by the liquid's surface.

This method, however, provides only coarse estimates of liquid volumes because there are inherent errors in the system. For example, the person using the rod for measurement might not insert the rod perfectly vertically into the tank or might read the calibrations incorrectly.

The lack of precision provided in this method of volume measurement is most limiting in attempts to detect the slow loss of gasoline due to leakage. Leakage of gasoline from underground tanks can cause serious environmental problems and result in devastating legal liabilities. If such leakage could be detected at an early stage, the tank could be repaired or replaced at a fraction of that environmental and economic cost.

The use of a calibrated rod to measure the level of gasoline also has the added disadvantage of requiring the attendant to leave the security of the service station building. This can be dangerous for the attendant and it leaves the building unattended and vulnerable to robbery or vandalism.

One development in the area of liquid volume measurements has been ultrasonic ranging systems. One such system uses ultrasonic transmitters positioned above the liquid to measure the distance of the surface of the liquid from the transducer. Examples of this type of system are shown in United States Patent No 4,221,004 issued to *Combs et al* on September 2, 1980 and United States Patent No. 3,184,969 issued to *Bolton* on May 25, 1965. These ultrasonic ranging systems are generally more accurate than a calibrated rod and they do not require a service station attendant to leave the building.

Unfortunately, these types of ultrasonic ranging systems are still not accurate enough for many uses. Such systems, for example, cannot determine whether a drop in the volume of the liquid is from loss of the liquid or from contraction due to a drop in the liquid's temperature. Adding a temperature detector will provide only limited correction since the temperature of gasoline usually varies over its volume and since there is no fixed coefficient of thermal expansion for gasoline which is nonhomogeneous and whose relative concentration of components varies. The knowledge of the temperature at one location in the gasoline is not very helpful when temperature-compensating for volume measurements.

Another attempt to improve the accuracy of ultrasonic volume measuring systems is the addition of calibrators. In United States Patent No. 4,210,969 issued to *Massa* on July 1, 1980, a small sound reflecting target located a fixed distance from the surface of the ultrasonic transducer is used to help to correct for variations in the velocity of sound in the medium. The system in *Massa*, however, only detects variations of sonic velocity in the air above the liquid, and not variations in the gasoline.

The system described in United States Patent No, 3,394,589 issued to *Tomioka* on July 30, 1968 is even more elaborate as it senses the reflections of ultrasonic energy off several equally spaced reflectors to make distance measurements. Although the additional reflectors can more accurately compensate for changes in sonic velocity through air, they also fail to account for changes of gasoline temperature.

Furthermore, ultrasonic ranging systems whose transducers sit above the gasoline cannot detect the presence of water in the bottom of the tank. If there is water below gasoline in a tank and a station operator, measuring the height of the liquid, does not recognize the presence of the water, the water may be accidentally pumped into a customer's tank. If this happens, the station operator runs the risk not only of losing customers, but also of possible legal action.

Conventional ultrasonic tank gauging systems whose receivers and transmitters are positioned at the bottom of gasoline tanks fail to measure the amount of water in such tanks reliably. Examples of such systems are described in United States Patent No. 3,693,445 issued to *Johnson* on September 26, 1972; United States Patent No. 3,985,030 issued to *Charlton* on October 12, 1976; and United States Patent No. 4,229,798 issued to *Rosie et al*, on October 21, 1970.

When the interface between the water and the gasoline lies very close to the transmitter and the receiver, ultrasonic signals reflected off the gasoline-water interface interfere with the transmission of subsequent signals and the tank gauge does not operate correctly.

The conventional tank gauging systems which have transducers beneath the surface of the liquid do not correct for temperature changes of the liquid. Of the systems listed above, only *Rosie et al* measures the temperature of the liquid. *Rosie et al*, however, uses only a temperature sensor located at one position of the liquid.

German Patent No. 878,723 issued to Atlas-Werke AG on 5 June 1953 discloses an ultrasonic echo detection method and apparatus, for indicating the level of a liquid in a container. A plurality of reflectors are disposed at different levels of the liquid container. However the transmitter and receiver are disposed underneath the container and, in common with the other prior proposals mentioned above, the Atlas-Werke AG system is not suitable to deal accurately with a gasoline/water interface adjacent the bottom of the liquid container.

With various preferred embodiments of the present invention, it is possible to provide only or more of the following:

(1) Measure the amount of liquid in a tank with great accuracy.

(2) Detect very small leaks in a tank and the theft of small volumes of liquid.

(3) Detect the presence of water in a gasoline tank and to measure the height of such water accurately.

(4) Accurate measurement of the volume of gasoline in an underground tank while avoiding the necessity of a service station employee's having to leave the service station building.

(5) Measure the amount of gasoline in a tank even when no service station attendant is on duty.

(6) Facilitate automatic system auditing so an inventory can be readily taken and product deliveries recorded even when the service station is unattended.

(7) Allow gasoline in a tank to be monitored frequently with little error and provide early warning alarms to a service station operator for any unusual conditions.

More generally, according to a first aspect of the present invention, there is provided a tank monitoring system comprising:

a tank containing a first liquid;

ultrasonic transducer means mounted adjacent the bottom of the tank, the transducer means being arranged to transmit ultrasonic energy into said first liquid above the transducer means, receive reflections of said transmitted energy from the surface of said first liquid, and form data signals representing said reflections;

a plurality of ultrasonic reflectors disposed within the tank, spaced at predetermined distances from each other and above said transducer means, such that each of the reflectors lies at a different predetermined height in the tank and, when below the surface of said first liquid, is operative to reflect said transmitted energy to said transducer means, which then forms further said data signals representing the reflections of said transmitted energy from said reflectors; and

means for causing said transducer means to transmit ultrasonic energy, receiving said data signals from said transducer means, and deriving therefrom a measurement signal;

characterised in that said transducer means is positioned within the tank at a predetermined distance above the bottom of the tank, so that a layer of a second liquid, denser than and immiscible with the first liquid, can lie below the level of the transducer means.

According to a second aspect of the present invention, there is provided a use of a tank monitoring system in accordance with the first aspect of the invention in a method of determining the amount of at least one liquid in a tank the method comprising the steps of:

(a) transmitting from said transducer means periodic bursts of pulses toward the surface of said first liquid;

(b) measuring a surface echo delay time between the transmission of a first set of pulse bursts and the receipt of the reflections of said first set of bursts from said surface of said first liquid;

(c) measuring a reflector echo delay time for each of said plurality of ultrasonic reflectors which is submerged below said surface of said first liquid, the reflector echo delay time for each reflector being the time between the transmission of a set of pulse bursts and the receipt of said set of pulse bursts' reflections from that reflector;

(d) calculating an average velocity of sound in said first liquid from said reflector echo delay times and from the known distances of said plurality of submerged reflectors from said transducer means; and

(e) calculating the height of said first liquid in said tank from said average sound velocity and said surface echo delay time.

Various optional features of the invention are set out in the dependent Claims 2 to 12 and 14 to 35 appended hereto, and examples of such features are given in the following description.

The accompanying drawings, which are incorporated and which constitute a part of this specification, illustrate one embodiment of the invention and, together with the description, explain the principles of the invention and various ways of performing it.

Figure 1 shows an embodiment of the tank gauging apparatus of this invention;

Figure 2a shows a probe which could be used in the tank gauging apparatus of Figure 1;

Figure 2b is a side view of a reflector having a concave bottom edge;

Figure 2c shows a detailed diagram of the console used in the tank gauging apparatus of Figure 1;

Figure 3 shows typical electrical signals sent to and produced by the transducer shown in Figure 1;

Figure 4 is a block diagram showing different methods of this invention;

Figure 5 is a flow diagram for measuring the surface echo delay time according to a method of this invention;

Figure 6 is a flow diagram for determining the average velocity of sound in a liquid according to one method of this invention;

Figure 7 is a flow diagram for measuring the closest reflector echo delay time according to one method of this invention;

Figure 8 is a flow diagram for measuring a next reflector echo delay time according to one method of this invention;

Figure 9 is a flow diagram for measuring an echo delay time in a window according to one method of this invention;

Figure 10 is a flow diagram for measuring a fuel-water interface echo delay time according to one method of this invention;

Figure 11 is a flow diagram for measuring the average sound velocity in an entire tank according to one method of this invention;

Figure 12 shows a typical transduced signal representing a reflected ultrasonic pulse;

Figure 13 shows the path of an ultrasonic signal used to measure the fuel-water interface echo delay time according to the method shown in Figure 10;

Figure 14 shows the path of an ultrasonic signal used to measure the bottom echo delay time according to the method shown in Figure 11;

Figure 15 is a graph showing sound velocities in different liquids at the same temperature;

Figure 16a shows one embodiment of this invention for measuring the temperature in a liquid;

Figure 16b shows another embodiment for measuring the temperature in a liquid; and

Figure 16c shows a third embodiment for measuring the temperature in a liquid.

## A. Tank gauging system

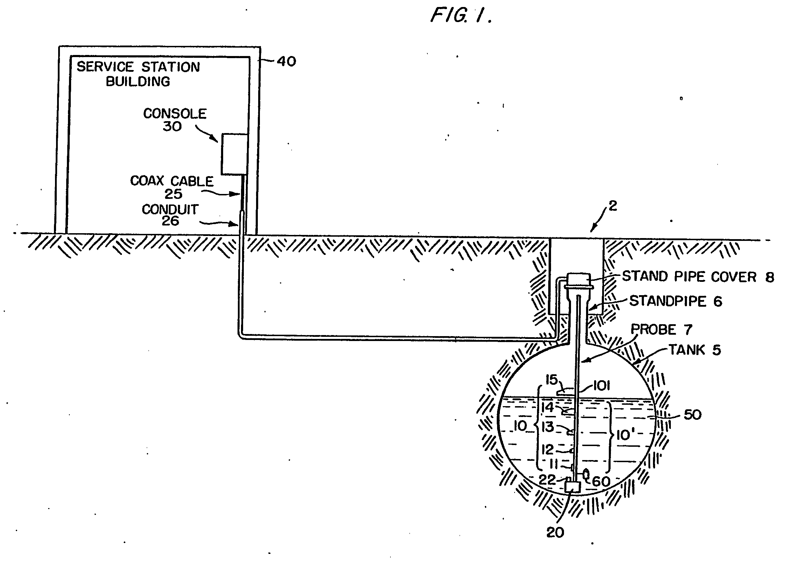

An embodiment of a tank gauging system for measuring the amount of liquid in a tank according to the present invention is shown in Figure 1. Tank 5 is filled with a liquid 50 whose volume or height is to be measured by a tank gauging system of this invention. In the description that follows, the term "amount" is used to mean either volume or height.

Tank 5 is set below ground level and is physically accessible only through manhole cover 2. The top of tank 5 includes standpipe 6 which is directly below manhole cover 2 and which is enclosed by standpipe cover 8.

The tank gauging system in Figure 1 includes a probe 7 extending vertically into liquid 50. Probe 7 includes a plurality of vertically aligned ultrasonic reflectors, shown as 10 in Figure 1. In Figure 1, the plurality of reflectors comprises individual reflectors 11—15 which each lie at a different height within tank 5. The function of the reflectors is explained more fully below but their general purpose is to reflect ultrasonic energy and thereby assist in the calibration of the tank gauging system.

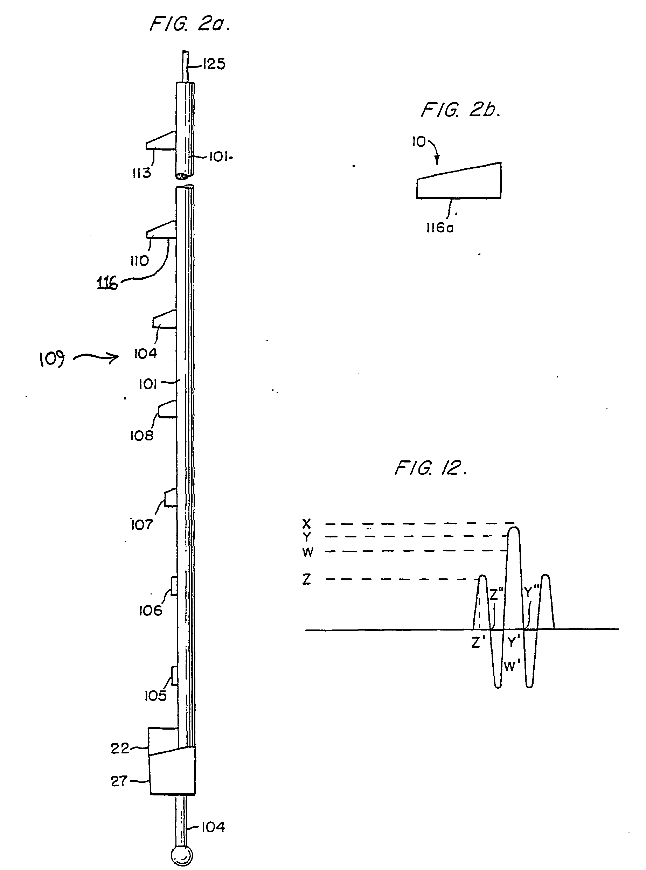

Figure 2a shows probe 7 in more detail. The probe in Figure 2a comprises reflectors 105—113 which are held at their different heights by reflector support member 101. The tops of the reflectors may be beveled to reduce secondary reflections of ultrasonic waves by reflecting waves striking the top of the reflectors away from the probe and the transducer.

Figures 2a shows a constant spacing between adjacent reflectors 10. Equal displacement of the reflectors is not required but, as will be apparent from the discussion below, the equal displacement of reflectors may simplify certain steps in methods which use the tank gauging system of this invention.

The tank gauging system of this invention also includes a transducer 22 positioned below the reflectors and designed to be located underneath the surface of the liquid in the tank and at a known height above the bottom of the tank. Transducer 22 emits ultrasonic energy into the liquid and forms data signals from the received reflections of that energy off the bottom reflector edges 116 and off the surface of the liquid.

In the preferred embodiment of the tank gauging system of this invention, transducer 22 is a standard ultrasonic receiver/transmitter and forms a part of transducer assembly 20. It is also possible to have transducer 22 contain a separate ultrasonic receiver and transmitter. The ultrasonic transducer chosen for the system of this invention must be able to receive the reflections of ultrasonic signals reflected off the bottom edge 116 of each reflector and off the surface of the liquid in the tank.

Figures 1 and Figure 2a shows that transducer 22 is supported at the top of transducer assembly 20. Transducer assembly 20 is connected to the bottom of reflector support member 101 and provides a path for the routing of signals to and from transducer 22.

Probe extension 104, seen in Figure 2a, extends from support 101, below transducer assembly 20 to prevent transducer assembly 20 from striking the bottom of the tank. Extension 104 also maintains probe 7, and therefore transducer 22, a known height above the bottom of the tank.

In the tank gauging system shown in Figures 1 and 2a, the reflectors most distant from transducer 20 are successively longer than the reflectors located closer to that transducer. This is done to ensure that reflections from the bottom edges 116 of the more distant reflectors, which travel a longer path than do reflections from closer reflectors, are sufficiently large to be detected by transducer 20. All the reflectors in the tank gauging system of this invention can, however, have the same length. There are two principal limitations on the lengths of the reflectors. First, the signals reflected from the most distant reflector must be able to be detected by the transducer and second, the signals reflected from the reflectors must be discriminatably smaller than signals reflected off the liquid surface.

The embodiment of the invention in Figure 2a shows the reflectors 10 in vertical alignment, but this is not required. Although it might seem that with a vertical alignment, the reflectors closer to the transducer would block the transmitted energy from the more distant reflectors, this is not the case. Transmitted ultrasonic energy which is not reflected by a reflector "bends" around that reflector and can be reflected by more distant reflectors. Similarly, reflections of ultrasonic energy from a reflector "bend" around the reflectors lying closer to the transducer.

The surfaces of the reflectors facing the transducer can be concave as shown in Figure 2b. To maximize the amount of ultrasonic energy reflected back to the transducer, the radius of curvature of the concave edge 116a of each reflector would equal the distance between the reflector and transducer. Such a design focuses the reflected ultrasonic signal back to the transducer. Each reflector in such a system would have a differently curved bottom surface.

A simpler approach to achieve the advantage of focusing is to manufacture reflectors with concave bottom edges all having the same radius of curvature. The most desirable curvature radius for such reflectors would be the distance between the transducer and the reflector farthest from the transducer.

Instead of the continuously curved bottom of the reflector shown in Figure 2b, the concave bottom surface may consist of any curve or collection of segments that tend to focus incident ultrasonic signals back to the transducer.

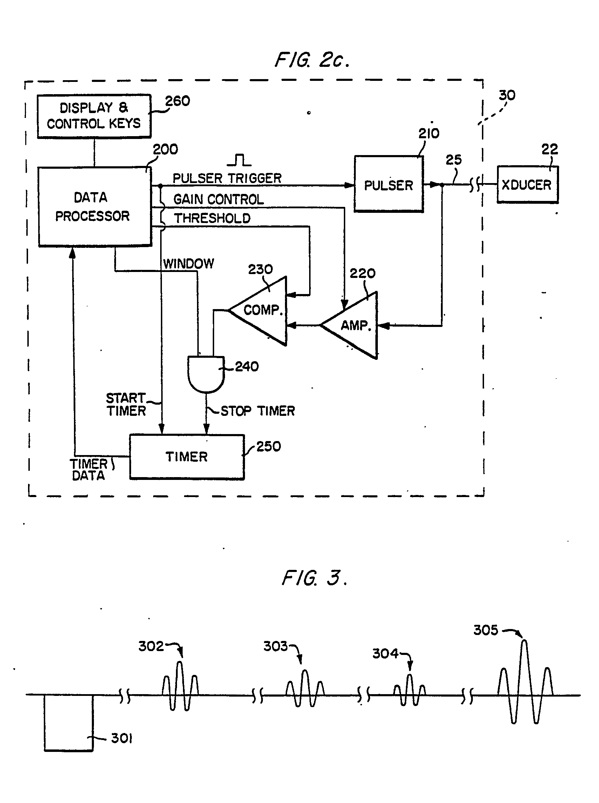

Figure 3 shows typical electric signals at a transducer 22 according to an embodiment of the invention. Signal 301 is the electric pulse sent to transducer 22. This is a negative signal which causes the transducer crystal to resonate and emit a burst of ultrasonic pulses into the liquid.

Signal 302 is formed by the transducer from the reflection of the transmitted pulse off of the reflector closest to the transducer. Signals 303 and 304 are formed by the transducer from reflections of the transmitted pulse off of more distant reflectors. Signal 305 is formed from the received reflection of a transmitted pulse off the surface of the liquid. Because the surface of the liquid is so large, the amplitude of the ultrasonic reflections off the surface of the liquid is substantially larger than the amplitude of the reflections of ultrasonic energy off the reflectors.

Because the tank gauging system of this invention may be used with flammable liquids and liquids which will explode if ignited, it is preferred that the tank gauging system be made explosion-proof or intrinsically safe.

The tank gauging system also includes means for causing the transducer to transmit ultrasonic energy and for receiving data signals formed by the transducer in order to determine the volume of the liquid in a tank. In the embodiment of the tank gauging system of this invention shown in Figure 1, console 30, located inside service station building 40, is included in the transmitting causing and signal receiving means.

A detailed diagram of the components in the preferred embodiment of console 30 appears as Fig. 2c. Preferably, console 30 would include a data processor 200, for example a microprocessor, to give the tank gauging system of this invention flexibility and computing power. Data processor 200 sends out control signals and receives data signals in order to perform the desired processes.

One signal produced by data processor 200 is a trigger signal which is sent to pulser 210. The trigger signal causes pulser 210 to transmit an activation signal for transducer 22. The activation signal, shown as negative-going pulse 301 in Fig. 3, causes transducer 22 to transmit a burst of ultrasonic signals (typically about ten pulses at the transducer's resonant frequency) into the liquid in the tank. Pulser 210 could have a variable amplitude control which would be set by data processor 200. In this manner, processor 200 could, by adjusting the amplitude of the activation signal, control the amplitude of the transmitted ultrasonic signal.

Console 30 communicates with transducer 22 via coaxial cable 25 which is carried inside conduit 26. As seen in Fig. 1, conduit 26 connects to standpipe cover 8.

The reflections of these transmitted ultrasonic signals are converted by transducer 22 into electrical signals (e.g., signals 302—305 in Figure 3) and are sent to console 30 over coaxial cable 25.

In the preferred embodiment of the invention, console 30 also includes signal detection circuitry to convert the electrical data signals from the transducer into the form needed by data processor 200.

The signal detection circuitry should include means for adjusting its sensitivity. Such means may include, for example, a variable threshold circuit, a variable amplifier for increasing the amplitude of the data signals sent from the transducer, or circuitry for increasing the amplitude of the excitation signal sent to the transducer.

In console 30, the data signals from transducer 22 are amplified by amplifier 220 and wave-shaped by comparator 230. Comparator 230 is synchronized with the data signals so the comparator output changes states when the data signal crosses the zero volt axis. Both the gain amplifier 220 and the threshold level (i.e. reference level) of comparator 230 are controllable by data processor 200 to adjust the sensitivity of the tank gauging system of this invention.

The output of comparator 230 indicates whether a signal of sufficient magnitude is present. The comparator output is inputted to AND gate 240 along with a "window" signal from data processor 200. The "window" signal is active during the time period in which data processor 200 is searching for a data signal from transducer 22. The output of AND gate 240 indicates whether a transducer data signal of sufficient magnitude is present during the time period represented by the "window" signal.

Timer 250 has a start and stop input and one data output. Timer 250 is started by data processor 200 when the trigger signal is sent to pulser 210 and is stopped by the signal at the output of AND gate 240. Timer 250 thus measures the time interval between the transmission of an activation pulse and the receipt of a reflection from that pulse (represented by a data signal from transducer 22) in the desired window. This time interval is available as an output to data processor 200.

Consolde 30 may also contain a display and control keys, identified in Fig. 2c by reference numeral 260. The program keys may be used to select the information displayed or to give commands and data to data processor 200. The information to be displayed may include data, such as time, tank temperatures or liquid height and volume, or the display may include instructions to the operator of the console.

Although Fig. 1 shows only one probe and one tank connected to console 30, it is possible to have connected to console 30 several probes each in a different tank. Such a system would include means for causing the transducers in each of those probes to transmit ultrasonic signals and for receiving the data signals formed by the transducers in each of those tanks in order to determine the volume of liquid in each of those tanks. For example, such a system could have a console connected to several probes by several cables, each dedicated to a single tank, or by a single cable which is timeshared by the probes.

For certain measurements, some of which are described below, it is necessary to know the temperature of the liquid or of a portion of the liquid in the tank. The tank gauging system can also include means for measuring the temperature of the liquid in the tank. In a preferred embodiment of this invention shown in Fig. 1, this means includes thermometer 60 which can be a standard temperature-sensing device that converts temperature measurements to electrical signals. The temperature measuring means is located in the liquid and is connected to the transmitting causing and data receiving means (console 30 in Flg. 1) via the data communication lines. These data communication lines could include coaxial cable 25 which connect transducer 22 to console 30 or could include a separate set of coaxial cables.

This tank gauging system can measure the volume of liquid in a tank with great resolution, thus allowing detection of very small changes in liquid volumes and measurement of the amount of water in a gasoline tank. Furthermore all measurements with this system can be made automatically, without the intervention of a service station attendant. Several methods of measurement which can use the tank gauging system are explained below.

B. Measurement of average sound velocity for the liquid in a tank

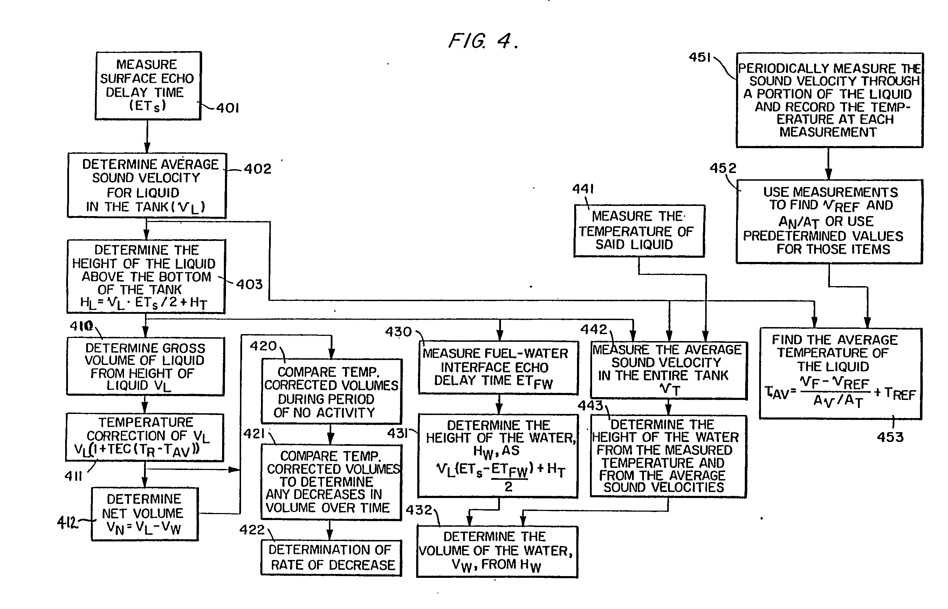

Fig. 4 shows a block diagram indicating different measurements or determinations which can be made with the tank gauging system of Figure 1. All of these measurements require the measurement of the average sound velocity for the liquid in a tank. Blocks 401 and 402 show the major steps for making such a measurement very accurately.

1. Measurement of surface echo delay time.

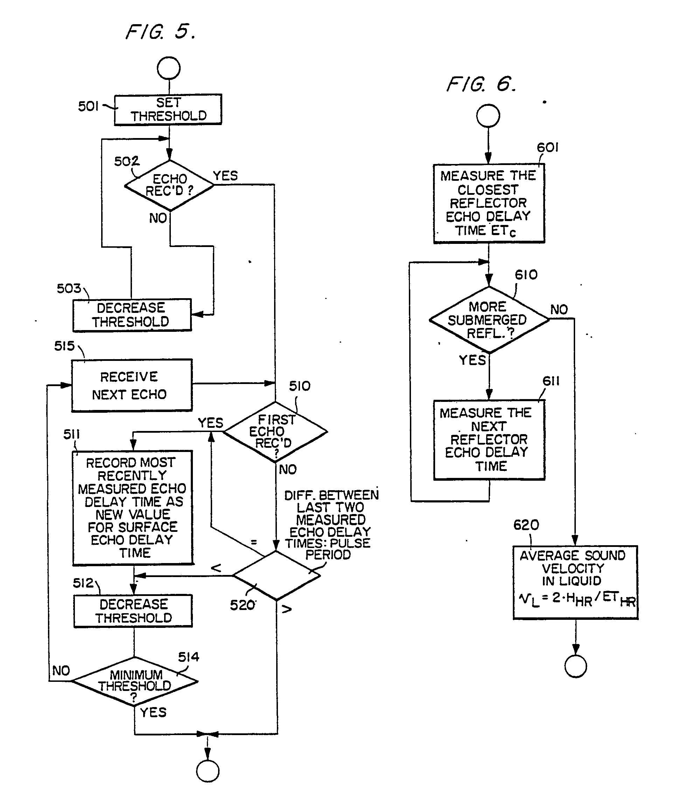

The first step in such a measurement, step 401 is to measure a surface echo delay time, referred to as $ET_s$. $ET_s$ is the time it takes for an ultrasonic signal to be transmitted from a transducer, to be reflected off the surface of the liquid in the tank and be received back by the transducer. The detailed steps of this measurement are shown in Figure 5.

The sensitivity setting and adjustment of the signal detection circuitry is described below in terms of threshold. It should be recognized that the sensitivity setting could also be, for example, the amplification factor (gain) of received data signals from a transducer or the amplification factor (gain) of the activation signal sent to a transducer.

In step 501, the threshold of a receiving device, for example, the signal detection circuitry in console 30 of Figure 2c, is set at a predetermined value. This predetermined value, if the sensitivity control is a threshold, can either be the maximum threshold setting of the receiving device or some predetermined level known to be appropriate for detecting surface reflections.

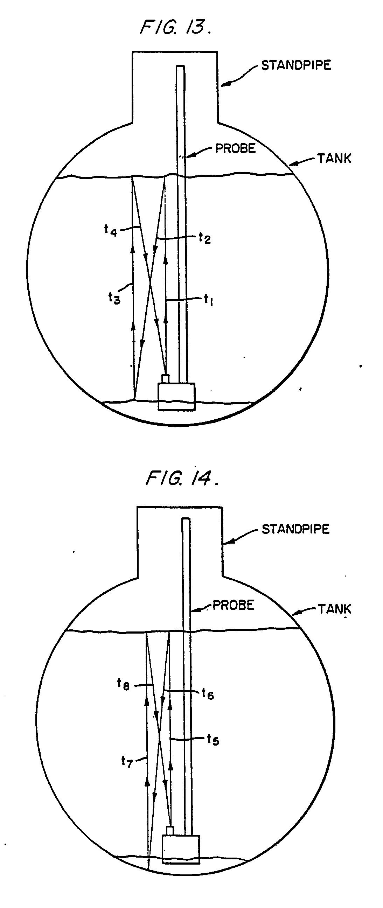

In the next step, step 502, a determination is made whether an echo, i.e. a reflection of an ultrasonic signal, has been received. To describe this step in further detail, reference is made to Figure 12 which shows a signal representing the reflection of an ultrasonic signal off the surface of the liquid. When the threshold of the receiving device is set at the level x, for instance, the transmitted signal's reflection shown in Figure 12 will not be detected.

If no echo or reflection is received, the threshold of the receiving device is decreased, step 503, and another inquiry is made regarding the receipt of an echo, step 502. The loop comprising steps 502 and 503 is continued until an echo is received. Referring to Figure 12, when the threshold is decreased to value y, then the receiving device will detect the presence of the illustrated reflection. If the console in Figure 2c is used with this method processor 200 adjusts the sensitivity and determines whether an echo was received.

Because echoes from the surface are, in this method, detected before echoes from the reflectors, the reflectors must be designed to ensure that the amplitude of their echoes is sufficiently smaller than the amplitude of the surface echoes to allow discrimination between surface echoes and reflector echoes.

When an echo is received, it must be determined whether this was the first echo received, because a slightly different procedure is followed for first echoes. This determination is step 510.

If the most recently received echo was the first echo received, then the echo delay time, which is the time between the transmission of an ultrasonic pulse and the measured receipt of the echo, is recorded as the new value for $ET_s$. The echo delay time appears at the output of timer 250 in the embodiment shown in Figure 2c.

If the threshold were set at value y, then the time of receipt of that pulse would be at time y'. In using the prefered embodiment of the circuitry shown in Figure 2c, the time which would be recorded is y'', the following zero-crossing. The recorded receipt times of different pulses in a burst thus differ by integral numbers of pulse periods.

After the new value for $ET_s$ is recorded, the threshold is again decreased in step 512 in an attempt to detect an earlier one of the reflected pulses in a burst. The most accurate measurement of $ET_s$ is obtained by detecting the reflection of the first-transmitted pulse in the burst.

If, upon decreasing the threshold, a predetermined minimum threshold is reached, then the

measurement of $ET_s$ is complete and is the most recently measured value for $ET_s$. The determination of a minimum threshold indicates that no more accurate measurement of $ET_s$ is possible.

If the threshold is not at a minimum, then the next echo is received in step 515 and the same question is asked with regard to whether this echo was the first received. If this echo is not the first received, then a comparison is made between the pulse period (one full cycle of a pulse in the transmitted burst) and the difference between the last measured echo delay time and the previously measured echo delay time.

If, for example, the threshold were set at level w, then the echo delay time would be measured from point $y''$ (not $w'$ for the reason described above). In this case, the last two echo delay times would be equal and their difference would be less than one pulse period so steps 512 and 514 would be repeated. Assuming that the threshold was not at a minimum, another echo would be received with the receiver set a lower threshold.

If the next threshold were level z in Figure 12, then, the echo delay time would be measured from point $z''$. The difference between the last two measured echo delay times, then, would be equal to one period. In this case, the echo delay time measured from point $z''$ would then be the new value of $ET_s$ and steps 512 and 514 would be repeated.

This method of "stepping back down" the received ultrasonic pulse burst is continued until either a minimum threshold is reached, step 514, or the third condition in step 520 is encountered; the difference between the last two echo delay times is greater than one pulse period. This third condition occurs if the last received echo signal is noise rather than a reflection of the transmitted signal. In such a situation, no more accurate a value for $ET_s$ can be determined so the echo delay time for the signal received prior to receiving the noise signal is deemed to be the most accurate value for $ET_s$.

By making the period of the transmitted pulse, which is a function of the resonant frequency at the transducer crystal, sufficiently short, any error in measuring $ET_s$ can be maintained at a low value. Furthermore, by stepping slowly back down the different pulses of the received pulse burst, it can be determined that the received signal is actually a reflection rather than a noise signal.

In measuring the surface echo delay time, disturbances on the surface may cause some variation in the amplitude of the echoes or reflections received by transducer 22. To reduce the possibility that these variations will cause an erroneous reading of $ET_s$, the threshold can be set at a value intermediate between the value needed to detect the echo being received and the value needed to detect the next earlier echo pulse in the burst.

Additional accuracy can be gained by taking multiple measurements at each threshold setting and averaging the measurements.

2. Measurement of reflector echo delay times

Returning to Figure 4, the step of measuring the average sound velocity, step 402, requires measuring reflector echo delay times, the steps for which are shown in Figures 6—9.

In Figure 6, the first step, 601 is to measure the closest reflector echo delay time referred to as $ET_c$. In this method, there are a plurality of refelctors, as shown, for example, in Figures 1 and 2a.

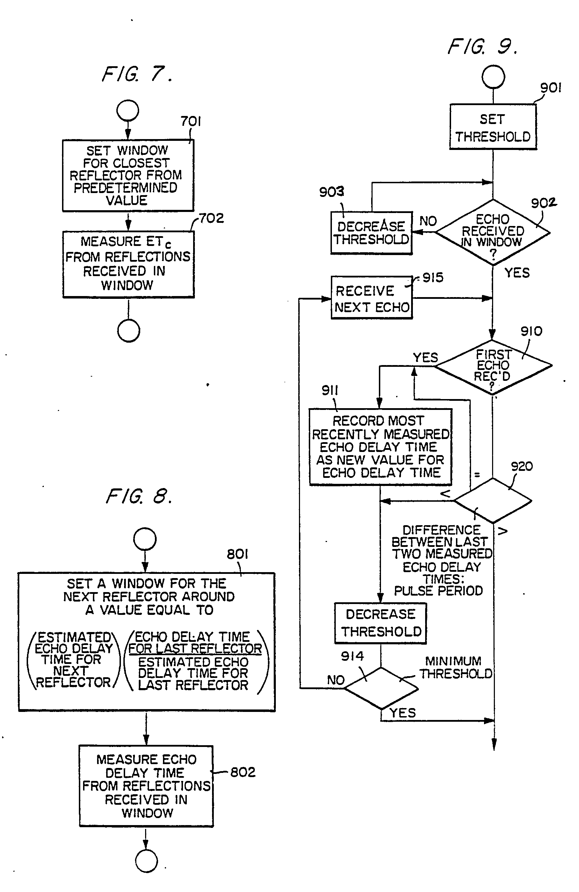

The details of the measurement for $ET_c$ are shown in Figure 7. The first step of such a measurement,step 701, involves the setting of a window for the closest reflector. That window is a time window in which to look for the ultrasonic pulse reflections from the reflector closest to the transducer. The duration and timing of this window is determinable from, for example, the distance between the transducer and the reflector closest to the transducer and from the possible range of sound velocities in the liquid being measured. The value for this window would, in the preferred embodiment of the tank gauging system described above, be stored in the data processor.

Once this window is set $ET_c$ is measured from the reflections received in that window. The method of making this measurement is shown in Figure 9, which method is similar to that outlined in Figure 5. Since the reflected signals from the reflectors will be smaller in amplitude than the signals reflected from the liquid surface, the threshold of the receiver in the preferred embodiment of this method is initially set to a lower value than it is when receiving reflections from the surface of the liquid. In Figure 9, the threshold is set (step 901) and is decreased (steps 902 and 903) until an echo is received (step 902).

When the first echo is received (step 910) the value for the most recently measured echo delay time (actually the zero-crossing time) is recorded as the new value for the echo delay time for a particular reflector (step 911). The threshold is then decreased (step 912) and, if the threshold is at a minimum (step 914), then the last-measured echo delay time is the value for the reflector echo delay time. If the threshold is not at a minimum, then the next echo is received and the period of the transmitted or received pulse is compared to the difference between the last two measured echo delayed times (step 920). If that difference is less than one pulse period, then steps 912 and 914 are repeated.

If that difference is equal to one pulse period then the echo delay time for the most recently received echo becomes the new reflector echo delay time (step 911) and the threshold is decreased again (step 912). If, however, the difference between the last two measured echo delay times is greater than one pulse period, then it is assumed that the most recently received echo was a noise signal and the reflector echo delay time is the last value entered for that time.

Once the closest reflector echo delay time is determined in step 601 of Figure 6, it must be determined whether they are additional submerged reflectors. This can be done, for example, from the heights of all the reflectors and $ET_s$. If there are additional submerged reflectors, then step 611, which requires the measurement of the echo delay time for the next most distant reflector from the transducer, is performed. The details of measuring the echo delay time for next reflector at the delay time are shown in Figure 8.

In step 801, a window for the next reflector is set based on the measured and estimated echo delay times for the last reflector, i.e, the reflector located next closest to the transducer. For each reflector, there is stored an estimated echo delay time similar to the estimated window for the closest reflector. After the echo delay time for a reflector is measured, a proportionality constant is calculated as the ratio of the measured echo delay time to the estimated echo delay time of that reflector. This proportionality constant indicates, in a general manner, how much the measured echo delay time for that reflector differs from the estimated echo delay time and provides a tool for estimating how much the next reflector's measured echo delay time will differ from its estimated echo delay time.

The proportionality constant is multiplied by the estimated echo delay time for the next reflector to form a revised estimated echo delay time for the next reflector. The window in which reflections from the next reflector will be searched is centered around this revised estimate for the next reflector echo delay time.

In step 802, an echo delay time for the next reflector is measured from reflections received in the window for that reflector. The details of this measurement are seen in the method shown in Figure 9. The individual steps of that method have been previously explained.

## 3. Determination of average sound velocity

If there are no other submerged reflectors, the average sound velocity in the liquid, $v_L$, can be calculated from the known height of the highest submerged reflector, $H_{HR}$, and from the echo delay time of the highest submerged reflector $ET_{HR}$. Thus:

$$v_L=(H_{HR}-H_T)(2/ET_{HR}).$$

$H_T$ is the height of the transducer above the bottom of the tank.

The reason for making this determination by the method outlined in Figure 6 is to provide great accuracy for the determination of the sound velocity in the liquid. Since certain liquids, like gasoline, are nonhomogeneous, the sound velocity may vary slightly in different portions of the liquid volume. The most accurate determination of sound velocity from this method requires measurements which take into account the maximum liquid volume, hence the submerged reflector closest to the surface is used. It is difficult, however, to detect which reflections are from the highest submerged reflector. That is why reflections from the closest reflector, to the transducer are detected first and reflections from successively farther transducers are detected until the reflections from the highest submerged reflector are found.

## C. Measurement of height or net volume of the liquid in a tank

The measurement of net volume includes steps 403—412. In step 403, the height of the liquid above the bottom of the tank, $H_L$, is determined from the surface echo delay time, $ET_s$, and from the velocity of sound in the liquid, $v_L$, by the following equation:

$$H_L=v_L(ET_s/2)+H_T.$$

Once the height of the liquid about the bottom of the tank is known, the gross volume of the liquid, $V_L$, can be determined either mathematically, if the exact geometry of the tank is known, or from a table relating the height of liquid in the tank to its volume (step 410).

The accuracy of this determination of gross volume comes from the precise measurements of $ET_s$ and $V_L$.

This determination of the gross volume may not be accurate enough for many applications because the volume of a liquid varies with the temperature of that liquid and the variation in a particular liquid may mask a drop in volume due, for example, to leakage. This variation with temperature is usually by a value called the Temperature Expansion Coefficient or TEC.

In step 411, the gross volume is temperature-corrected by multiplying it by $(1+TEC(T_R-T_{AV}))$. TEC is the temperature expansion coefficient for the particular liquid, $T_R$ is a reference temperature and $T_{AV}$ is an average temperature of the liquid. A method for accurately determining the average temperature of liquid is described below.

The gross volume of liquid, however, may not be of interest, especially if the tank contains gasoline. In gasoline tanks, there is often an accumulation of water at the bottom of the tank. To determine the net volume of gasoline in a tank, it is necessary to subtract from the gross volume of liquid in the tank $V_L$, the volume of water, $V_W$ in the tank (step 412). There are described below techniques for determining the volume of water in a tank.

The accuracy of the method of determining the net volume of liquid in a tank just described makes it ideal for use in detecting the loss of product due to theft or leakage.

## D. Theft or leak detection

Of course, one method of detecting the theft of liquid from a tank is by noting unauthorized dispensing of that liquid. There may be instances, however, when such a method will not work. Furthermore, it may be desired to detect leakage of the liquid from the tank. Leakage occurs at a very slow rate so accurate determinations of the volume of the liquid in the tank are needed for such detection.

A method of theft or leak detection using the gross volume measurement method described above is shown in Figure 4, boxes 420—422. The method can also compare net volumes, however it is important to know whether the leakage from the tank involves only water and a comparison of net volumes will only identify a leakage of fuel.

In step 420, there is a comparison of temperature corrected gross volumes of liquid during periods of no activity. A period of no activity occurs when no deliveries are made to the tank of liquid and no authorized dispensing of that liquid is taking place. In a service station, this can occur overnight or on holidays, or such a period can be regularly scheduled so that a particular tank is shut down to check for leakage or theft.

Because the volumes compared are temperature-corrected, this method can determine whether any decrease in volume is due to a change in temperature or due to the loss of liquid by theft or by leakage.

In step 421, any decreases in temperature-corrected volumes are noted, and in step 422, the rate of such decreases are determined from the measured loss in volume and the time during which that loss occured. From the rate of decrease, it can be determined whether a loss in volume is significant, and, if it is, whether that loss is due to theft or leakage. For thefts, the rate of change of volume will not be steady: large losses of volume over a very short time and no changes in volume for long periods of time. In the case of leakage, there will be small, relatively constant decreases in volume over very large periods of time.

In leakage detection especially, it is necessary to have a high resolution volume measurement, and the method described above for measuring the volume of liquid in a tank for a range of temperatures is ideally suited for such detection.

E. Water volume measurement
Method I

One method of water volume measurement according to the present invention is shown in steps 401—403 and 430—32. First, the surface echo delay time, $ET_s$, the average sound velocity of the total amount of liquid in a tank, $v_L$, and the total height of the liquid above the bottom of the tank, $H_L$, are all determined as indicated above (steps 401—403). The next step is to measure the fuel-water interface echo delay time, $ET_{FW}$, as indicated in step 430. $ET_{FW}$ differs from the other echo delay times described since its measurement involves three reflections as seen by reference in Figure 13.

As Figure 13 shows, $ET_{FW}$ has four components comprising the transmitted signal and three reflections. The first component is time $t_1$, which is the time it takes an ultrasonic pulse to travel from the transducer to the surface of the liquid in the tank. The second component of $ET_{FW}$ is $t_2$, which is the time it takes for the ultrasonic pulse to travel between the surface of the liquid of a tank and the fuel-water interface after the ultrasonic pulse has been reflected the first time. The third component of $ET_{FW}$, $t_3$ is the time it takes the ultrasonic pulse burst to travel between the fuel-water interface and the surface of the fuel after being reflected off the fuel-water interface. The final component of $ET_{FW}$ is shown in Figure 13 as $t_4$ which is the time it takes the ultrasonic pulse burst to travel between the surface of the liquid and the transducer after being reflected a third time.

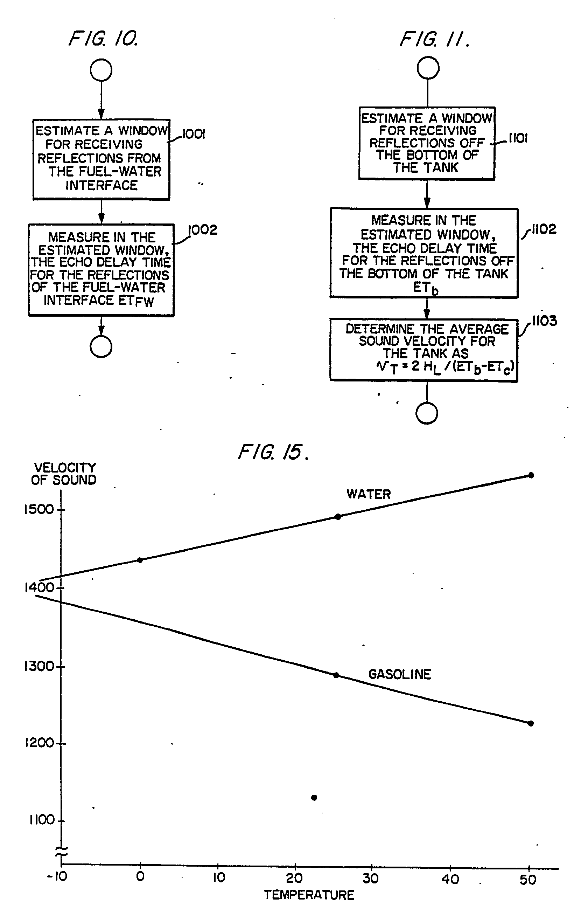

The details for measuring the fuel-water interface echo delay time are shown in Figure 10. First, as step 1001 indicates, a window is estimated for receiving the reflections of the fuel-water interface. This estimate can be based upon the determine of values for $ET_s$, $v_L$ and $H_L$, as well as on an estimated range of water level heights.

The next step, step 1002, is to look for reflections in the estimated window and measure $ET_{FW}$. The measurement of $ET_{FW}$ involves the method shown in Figure 9 which has been previously explained.

Once $ET_{FW}$ is measured, then the height of the water in the tank, $H_W$, is determined according to the equation shown in step 431:

$$H_W = v_L(ET_s - ET_{FW}/2) + H_T.$$

The derivation of this equation stems from the definition of $ET_{FW}$. As seen in Figure 13:

$$ET_{FW} = t_1 + t_2 + t_3 + t_4$$
$$= t_1 + t_4 + t_2 + t_3$$
$$= ET_s + ET_W,$$

where $ET_W$ is twice the time required for an ultrasonic pulse to travel between the surface of the liquid and the fuel-water interface.
Thus:

$$ET_W = ET_{FW} - ET_s.$$

The height of the water, $H_W$ is equal to the difference between the height of the liquid, $H_L$, and the distance between the surface of the liquid and the fuel-water interface. In other words:

$$H_W = H_L - v_L(ET_W/2).$$

From the equations for $H_L$ (step 403) and $ET_W$:

$$H_W = v_L(ET_s/2) + H_T - v_L[(ET_{FW} - ET_s)/2]$$
$$= v_L(ET_s - ET_{FW}/2) + H_T.$$

This last equation is the equation set forth in step 431 in Figure 4.

In step 432, the volume of water, $V_W$ is determined from the height of the water, $H_W$, in much the same way as the gross volume of the liquid, $V_L$, is determined from the height of the liquid, $H_L$, in step 410. This can be either by a table lookup method or by calculation if the geometry of the tank is known. Usually, water height rather than water volume is displayed since the nearness of the water to the transducer is of primary importance.

This method for measuring the volume of water is especially effective if the fuel-water interface is not close to the level of the transducer. If the transducer is close to the fuel-water interface, then the reflections from the fuel-water interface may create problems in detecting $ET_{FW}$.

Typically water height rather than water volume will be displayed to the operator since water height gives a more readily observed indication of whether the amount of water in the tank is at a dangerous level.

Method II

Another method of measuring water volume is seen in Figure 4 by the steps 401—403 and 441—3 and 432.

In step 441, the temperature of the liquid in the tank is measured either by a thermometer or by some other method, such as the method described below. In step 442, the average sound velocity in the entire tank, $v_T$, is measured. This measurement differs from the measurement in step 402 which only measured the velocity of sound through the liquid above the transducer. If there was water at the bottom of the tank, the sound velocity that was measured in step 402 is just the sound velocity through the fuel and not through both the fuel and the water.

The detailed steps for measuring the average sound velocity in the entire tank are shown in Figure 11. In the first step of that method of measurement, a window for receiving reflections off the bottom of the tank (or off a lip on the transducer which lies below the fuel water interface) is estimated. Such an estimate may be made from $ET_s$, $v_L$ and $H_L$.

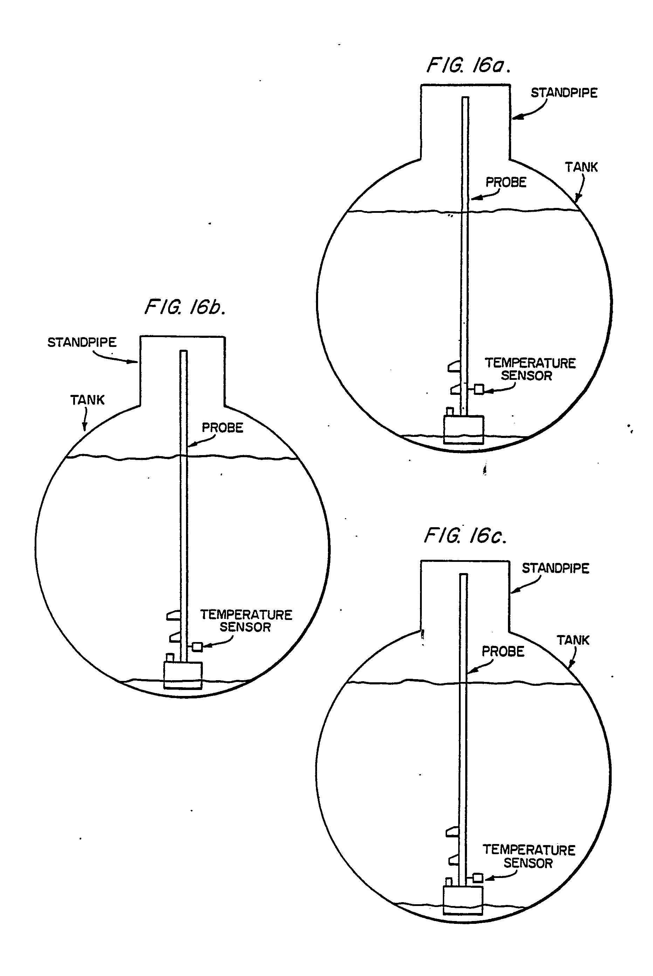

The echo delay time being measured in Figure 11 is the echo delay time off the bottom of the tank, $ET_b$, as shown in Figure 14, Rather than using reflections of the bottom of the tank, $ET_b$ can be measured using reflections off a transducer lip. The lip on the transducer is used especially when the bottom of the tank is believed to contain debris.

$ET_b$ is equal to the sum of times $t_5$—$t_8$. Time $t_5$ is the time it takes an ultrasonic pulse to travel from the transducer to the surface of the fuel. The time for the pulse to travel from the fuel surface to the bottom of the tank or the transducer lip after the first reflection is time $t_6$, and the time for that reflection to travel back from the bottom of the tank or transducer lip to the surface of the fuel is time $t_7$. Time $t_8$ is the time it takes for the ultrasonic pulse to travel from the surface of the fuel back to the transducer after being reflected a third time.

Next, $ET_b$ is measured by detecting reflections in the estimated window for the bottom echo delay time (step 1102). Again, in the preferred embodiment this measurement uses the method shown in Figure 9.

Step 1103 contains an equation for determining the average velocity for the entire tank. The average sound velocity of the entire tanke, $v_T$, is the distance from the surface of the liquid to the bottom of the tank $H_L+H_T$, divided by the time it takes for an ultrasonic pulse to travel that distance, $t_B$. If the reflections off the transducer lip are used instead, the value for $H_T$ is adjusted accordingly.

Figure 14 shows that:

$$\begin{aligned} ET_b &= t_5+t_6+t_7+t_8 \\ &= t_5+t_8+t_6+t_7 \\ &= ET_s+2t_B. \end{aligned}$$

Thus:

$$\begin{aligned} t_B &= (ET_B-ET_s)/2; \text{ and} \\ v_T &= (H_L+H_T)2/(ET_b-ET_s) \end{aligned}$$

The height of the water in the tank is determined in step 443 by comparing the average sound velocities in the fuel, $v_L$, and in the entire tank $v_T$, for the measured temperature. If the velocity of sound is sufficiently different through water and through fuel for the measured temperature, graphs, such as the one in Figure 15 which shows a relationship between velocity of sound through a fuel and through water at a certain temperature, can be used to determine what height of water must be contained in the tank to account for the differences in sound velocities in the entire tank and in the fuel.

Once the height of the water is known, the volume of the water can be determined by method described in relationship to step 432.

This method of measuring water volume is most accurate when the volume of water is substantial, and thus can be used in those instances when the fuel-water interface is close to the height of the transducer. This method works best when the velocity of sound through fuel is appreciably different at all temperatures from the velocity of sound through water.

Another advantage of this method is that the change in the velocity of sound with temperature through many fuels is in a direction different from the change in the velocity of sound with temperature through water.

F. Determination of average temperature

A method of determining the average temperature of the liquid in the tank is shown in Figure 4 by steps 401, 402 and 453. Additionally, steps 451 and 452 can be used to provide greater accuracy for that temperature measurement.

The surface echo delay time, $ET_s$, and the average sound velocity of the liquid in the tank, $v_L$, are determined in steps 401 and 402.

The average temperature of the liquid can be determined in step 453 if several values are known. The first value that must be known is how the velocity of sound in that liquid changes with the change in temperature, $\Delta v/\Delta T$. This value has been determined for many liquids. The other value that must be known is the velocity of sound through the liquid, $v_{Ref}$, at some reference temperature, $T_{Ref}$.

The change in velocity of the sound through the

liquid, $v_L - v_{Ref}$, divided by the difference between the liquid's temperature and the reference temperature, $T_{Av} - T_{Ref}$, should equal $\Delta v/\Delta T$. In other words:

$$T_{Av} = (v_L - v_{Ref})/(\Delta v/\Delta T) + T_{Ref}$$

This equation can be simplified if $T_{Ref}$ is made equal to 0 degrees.

If the values for $\Delta v/\Delta T$ and for $v_{Ref}$ and $T_{Ref}$ are not known, or if it is desired to know these values with a greater accuracy, these values can be determined by the steps 451 and 452.

In step 451, the velocity of sound through a portion of the liquid is measured periodically and for each such velocity measurement, a temperature measurement is also taken. Such a temperature measurement can be taken by some type of thermometer. In a preferred embodiment of this method, the sound velocity and temperature would be measured in the region between the transducer and the reflector lying closest to the transducer. The advantage of taking the measurements in this region is that in a small region, the temperature is relatively constant.

The sound velocity can be measured by determining $ET_c$, the echo delay time of the closest reflector, and dividing it into twice the distance between the transducer and the reflector closest to the transducer.

Figures 16a—16c show three possible placements for the thermometer. Such a device can be located adjacent to the closest reflector, shown in Figure 16a, at a point between the closest reflector and the transducer, shown in Figure 16b, or adjacent the transducer, shown in Figure 16c.

When several velocity and temperature measurements have been taken, $\Delta v$ and $\Delta T$ can be determined accurately for the liquid at particular temperatures. In addition, the reference velocity of the liquid, $v_{Ref}$, can also be determined for a reference temperature, $T_{Ref}$, with great accuracy, hence the average temperature determination in step 453 can be very precise.

**Claims**

1. A tank monitoring system comprising:
a tank (5) containing a first liquid (50);
ultrasonic transducer means (20) mounted adjacent the bottom of the tank (5), the transducer means (20) being arranged to transmit ultrasonic energy into said first liquid (50) above the transducer means (20), receive reflections of said transmitted energy from the surface of said first liquid (50), and form data signals representing said reflections;
a plurality of ultrasonic reflectors (11—15) disposed within the tank (50), spaced at predetermined distances from each other and above said transducer means, such that each of the reflectors (11—15) lies at a different predetermined height in the tank (5) and, when below the surface of said first liquid (50), is operative to reflect said transmitted energy to said transducer means (20), which then forms further said data signals representing the reflections of said transmitted energy from said reflectors (11—15); and
means (30) for causing said transducer means (20) to transmit ultrasonic energy, receiving said data signals from said transducer means (20), and deriving therefrom a measurement signal;
characterised in that said transducer means (20) is positioned within the tank at a predetermined distance above the bottom of the tank (5), so that a layer of a second liquid, denser than and immiscible with the first liquid (50), can lie below the level of the transducer means (20).

2. A system according to Claim 1, wherein at least one of said ultrasonic reflectors (11—15) has a concave bottom surface to focus therefrom reflections of said transmitted energy back to said transducer means (20).

3. A system according to Claim 1 or 2, wherein said ultrasonic reflectors (11—15) are vertically aligned; and the upper surface of said reflectors are beveled for ensuring that ultrasonic waves striking said beveled surfaces are reflected away from said reflectors and said transducer means.

4. A system according to Claim 1, 2 or 3, wherein said ultrasonic reflectors (11—15) are equally spaced from one another.

5. A system according to any of Claims 1 to 4, wherein the more distant an ultrasonic reflector (11—15) is from said transducer means (20), the longer is its horizontal dimension.

6. A system according to Claim 2 or to any of Claims 3 to 5 together with Claim 2, wherein the radius of curvature of each of said concave surfaces of said reflectors (11—15) is constant.

7. A system according to Claim 2 or to any of Claims 3 to 5 together with Claim 2, wherein the radius of curvature of said concave surface of each of said ultrasonic reflectors (11—15) equals the distance of that reflector from said transducer means (20).

8. A system according to any of Claims 1 to 7, wherein said transmission causing and data receiving means includes:
(i) a data processor (200);
(ii) a pulser (210) connected to said data processor (200) for causing said transducer means (20) to transmit ultrasonic energy into said liquid (50);
(iii) signal detection circuitry (220—240) for receiving said data signals from said transducer means (20) and for indicating whether a reflection of said transmitted energy was received of said transducer means (20) within a predetermined time window; and
(iv) a timer (250) connected to said data processor (200) and said signal detection circuitry (220—240) to measure the time between the transmission of ultrasonic energy and the receipt within said predetermined time window of reflections of said transmitted energy.

9. A system according to Claim 8, wherein said signal detection circuitry (220—240) has variable sensitivity means operable for substantially enhancing the discrimination between data signals received from said reflectors, and data signals received from the surface of said liquid.

10. A system according to Claim 8 or 9, wherein said pulser (210) is operable for causing said transducer means (20) to transmit ultrasonic energy of variable amplitude, for enhancing the data signal discrimination of said system.

11. A system according to any of the preceding claims, wherein said measurement signal is representative of the height of said first liquid (50) in the tank (5).

12. A system according to any of the preceding claims, including means for determining the amounts of said first and second liquids in the tank (5).

13. Use of a tank monitoring system according to any of the preceding claims in a method to determine the amount of at least said first liquid in said tank, the method comprising the steps of:

(a) transmitting from said transducer means (20) periodic bursts of pulses toward the surface of said first liquid (50);

(b) measuring a surface echo delay time between the transmission of a first set of pulse bursts and the receipt of the reflections of said first set of bursts from said surface of said first liquid (50);

(c) measuring a reflector echo delay time for each of said plurality of ultrasonic reflectors (11—15) which is submerged below said surface of said first liquid (50), the reflector echo delay time for each reflector being the time between the transmission of a set of pulse bursts and the receipt of said set of pulse bursts' reflections from that reflector;

(d) calculating an average velocity of sound in said first liquid (50) from said reflector echo delay times and from the known distances of said plurality of submerged reflectors (11—14) from said transducer means (20); and

(e) calculating the height of said first liquid (50) in said tank (5) from said average sound velocity and said surface echo delay time.

14. A use according to Claim 13, wherein the step of measuring said reflector echo delay times includes the step of measuring a closest reflector echo delay time between the transmission of a second set gf pulse bursts and the receipt of the reflections of said second set of pulse bursts in a predetermined window from one of said plurality of reflectors (11—15) lying closest to said transducer means (20).

15. A use according to Claim 14, wherein the step of measuring said reflector echo delay times includes for each submerged reflector (12—14) other than said reflector (11) lying closest to said transducer means (20) the steps of:

(i) estimating reflector echo delay time from the echo delay time measured for the reflector (11) located immediately nearer said transducer means (20); and

(ii) sensing reflections in a time window surrounding said estimated echo delay time.

16. A use according to Claim 13, 14 or 15, wherein the step of calculating an average speed of sound includes the step of dividing the distance of the submerged reflector (14) located most distant from said transducer means (20) by one half of the echo delay time for said most distance submerged reflector (14).

17. A use according to any of Claims 13 to 16, wherein the step of measuring said surface echo delay time includes the steps of:

(i) setting an ultrasonic receiver at a predetermined sensitivity;

(ii) adjusting the sensitivity of said receiver until a first reflection of said first set of periodic pulse bursts is detected;

(iii) setting as a first value for said surface echo delay time the time between the detection of said first reflection and the transmission of the one of said pulse bursts which was reflected to form said first reflection;

(iv) adjusting the sensitivity and measuring subsequent echo delay times between the detection of reflections and the transmission of the pulse bursts causing said reflections;

(v) measuring an echo delay time difference between the most recently measured echo delay time and the next most recently measured echo delay time;

(vi) assigning the most recently measured echo delay-time as the new value for said surface echo delay time if said echo delay time difference is equal to one period of said pulses in said burst;

(vii) adjusting the sensitivity further if echo delay time difference is less than or equal to one period of said pulses in said burst;

(viii) terminating the measurement of said echo delay time if said sensitivity is at a predetermined limit; and

(ix) choosing as said surface echo delay time the next most recently measured echo delay time if said echo delay time difference exceeds one period of one of said pulses in said burst.

18. A use according to Claim 17, wherein:

the step of setting said ultrasonic receiver at a predetermined sensitivity includes the step of setting the threshold of said receiver to a predetermined threshold value;

the steps of adjusting the sensitivity includes the step of increasing the threshold of said receiver; and

the step of terminating the measurement includes the step of terminating the measurement when the receiver threshold is at a predetermined minimum value.

19. A use according to Claim 17 or 18, wherein:

the step of setting said ultrasonic receiver at a predetermined sensitivity includes the step of setting the gain of said receiver at a predetermined value;

the steps of adjusting the sensitivity include the step of increasing the gain of said receiver; and

the step of terminating the measurement includes the step of terminating the measurement when the receiver gain is at a predetermined maximum value.

20. A use according to Claim 17, 18 or 19 wherein:

the step of setting said ultrasonic receiver at a predetermined sensitivity includes the step of setting the gain of said transducer transmitting pulses at a predetermined value;

the steps of adjusting the sensitivity include the step of increasing the gain of said transducer means (20); and

the step of terminating the measurement includes the step of terminating the measurement when the transducer gain is at a predetermined maximum value.

21. A use according to Claim 15 together with any of claims 17 to 20, wherein the step of measuring the closest reflector echo delay time includes the steps of:

(i) adjusting the sensitivity of said receiver from a predetermined level until a reflection is received in said predetermined window; and

(ii) measuring echo delay times of said closest reflector as the sensitivity of said receiver is adjusted until the most recently measured echo delay time differs from the next most recently measured echo delay time by more than the period of one of said pulses in said bursts, said closest reflector echo delay time being the next most recently measured echo delay time.

22. A use according to Claim 21, wherein the step of measuring the reflector echo delay times of said plurality of reflectors includes the following steps for each of said plurality of reflectors:

(a) adjusting the sensitivity of said receiver from a predetermined minimum level until a reflection is received approximately equaling the estimated reflector echo delay time after a pulse burst is transmitted; and

(b) measuring echo delay times of said reflector as the sensitivity of said receiver is adjusted until the most recently measured echo delay time differs from the next most recently measured echo delay time by more than the period of one of said pulses in said bursts, said reflector echo delay time being the next most recently measured echo delay time.

23. A use according to Claim 22, wherein the step of adjusting the threshold of said receiver includes the step of searching for a reflection in a window centered around said estimated echo delay time.

24. A use according to Claim 23, wherein the step of measuring echo delay times includes the steps of:

(a) repeating the echo delay time measurement a predetermined number of times; and

(b) averaging said echo delay time measurements to obtain the desired echo delay time.

25. A use according to Claim 22, wherein the step of estimating the echo delay time of each of said plurality of reflectors includes, for each of said reflectors, the steps of:

(a) determining a proportionality constant equal to the ratio of a stored, estimated value for the reflector echo delay time for the reflector immediately nearest said transducer means and the measured echo delay time for the reflector immediately nearest said transducer means; and

(b) multiplying said proportionality constant by a stored, estimated value for the reflector echo delay time for the reflector whose echo delay time is being estimated.

26. A use according to any of Claims 13 to 25, further including the step of determining the volume of said first liquid in said tank from said determined height and the dimensions of said tank.

27. A use according to Claim 26, further including the steps of:

determining the average temperature of said liquid in said tank; and

normalizing the determined volume of said liquid to a reference temperature using said average temperature.

28. A use according to Claim 27, wherein the step of determining the average temperature of a liquid in said tank further includes the steps of:

(a) measuring the average sound velocity of said liquid in said tank;

(b) determining a reference sound velocity $v_R$ in said liquid, at a reference temperature $T_R$ of said liquid and a relational correspondence between change in the temperature and change in sound velocity of said liquid $\Delta v/\Delta T$; and

(c) determining the average temperature of said liquid from $v_R$, $T_R$ and $\Delta v/\Delta T$.

29. A use according to Claim 28, wherein the step of determining $v_R$, $T_R$ and $\Delta v/\Delta T$ includes the steps of:

(a) measuring the velocity of sound through a portion of said liquid at periodic intervals; and

(b) measuring the temperature of said portion of said liquid at each sound speed measurement.

30. A use according to Claim 29, wherein the step of measuring the speed of sound in a portion of said liquid includes the steps of measuring the speed of sound between a transducer and a lowest reflector located close enough to said transducer means such that the temperature of said liquid between said reflector and said transducer means is relatively constant.

31. A use according to Claim 28 or 29, wherein the step of determining the average temperature $T_{av}$ of said liquid includes the step of calculating average temperature from the equation:

$$T_{av}=(\text{velocity of sound in said liquid}-V_R)/(\Delta v/\Delta T)+T_R.$$

32. A use according to any of Claims 13 to 31, wherein said tank (5) contains said first and second liquids, said method further including determining the height of said second liquid, and comprising the steps of:

(a) transmitting, from said transducer means (20) located beneath the surface of said first liquid (50) and above the interface of said first and second liquids, a periodic burst of ultrasonic pulses toward the surface of said first liquid (50);

(b) measuring the combined height of said first and second liquids in said tank (5) using said pulse bursts;

(c) measuring the echo delay time from said interface for a first set of pulse bursts to travel from said transducer means (20), reflect off said surface of said first liquid (50) a first time, reflect off said interface, reflect off said surface of said first liquid (50) a second time, and be received by said transducer means (20); and

(d) determining from said interface echo delay time, and said combined height, the height of said first liquid (50) above said interface, and the height of said second liquid.

33. A use according to Claim 32, further including the step of determining the volume of said second liquid from the measured height of said second liquid and the tank dimensions.

34. A use according to Claim 33, wherein the step of measuring the combined height of said first and second liquids in said tank (5) includes the steps of:

(i) measuring a surface echo delay time between the transmission of a second set of pulse bursts and the receipt of the reflections of said second set of bursts from said surface of said first liquid (50);

(ii) measuring a reflector echo delay time for each of the submerged ones of said plurality of reflectors (11—15), the reflector echo delay time for each reflector (11—14) being the time between the transmission of a set of pulse bursts and the receipt of said set of pulse bursts' reflection from that reflector;

(iii) calculating an average velocity of sound through said first and second liquids in said tank (5) from said reflector echo delay times and from the distances from said transducer means (20) to said plurality of submerged reflectors (11—14); and

(iv) calculating the combined height of said first and second liquids from said average sound speed and said surface echo delay time.

35. A use according to any of Claims 13 to 34, wherein said first liquid is gasoline and said second liquid, if present, is water.

## Patentansprüche

1. Ein Tanküberwachungssystem, das umfaßt:
einen Tank (5), der eine erste Flüssigkeit (50) enthält;
eine Ultraschallwandlereinrichtung (20), die angrenzend an den Boden des Tanks (5) angeordnet ist, wobei die Wandlereinrichtung (20) dazu vorgesehen ist, Ultraschallenergie in die erste Flüssigkeit (5) oberhalb der Wandlereinrichtung (20) zu übertragen, Reflexionen der übertragenen Energie von der Oberfläche der ersten Flüssigkeit (50) zu empfangen und die Reflexionen repräsentierende Datensignale zu bilden;
eine Vielzahl von Ultraschallreflektoren (11—15), die in dem Tank in vorbestimmten Distanzen zueinander und oberhalb der Wandlereinrichtung angeordnet sind, so daß jeder der Reflektoren (11—15) in einer unterschiedlichen vorbestimmten Höhe in dem Tank (5) liegt, und, wenn er unterhalb der Oberfläche der ersten Flüssigkeit (50) liegt, in der Lage ist, die übertragene Energie zu der Wandlereinrichtung (20) zu reflektieren, welche dann weiterhin die Datensignale, die Reflexionen der übertragenen Energie von den den Reflektoren (11—15) repräsentieren, bildet, und

eine Einrichtung (30) zum Aktivieren der Wandlereinrichtung (20), Ultraschallenergie zu übertragen, die Datensignale von der Wandlereinrichtung (20) zu empfangen und daraus ein Meßsignal abzulieten:

dadurch gekennzeichnet, daß die Wandlereinrichtung (20) innerhalb des Tanks in einem vorbestimmten Abstand oberhalb des Bodens des Tanks (5) positioniert ist, so daß eine Schicht einer zweiten Flüssigkeit, die dichter als die erste Flüssigkeit (50) und unvermischbar mit der ersten Flüssigkeit (50) ist, unterhalb des Niveaus der Wandlereinrichtung (20) liegen kann.

2. System nach Anspruch 1, wobei wenigstens einer der Ultraschallrefkeltoren (11—15) eine konkave Bodenoberfläche aufweist, um damit Reflexionen der übertragenen Energie zurück zu der Wandlereinrichtung (20) zu fokussieren.

3. System nach Anspruch 1 oder 2, wobei die Ultraschallreflektoren (11—15) vertikal ausgerichtet sind; und die obere Oberfläche der Reflektoren abgeschrägt ist, um zu sichern, daß Ultraschallwellen, die auf die abgeschrägten Oberflächen auftreffen, von den Reflektoren und der Wandlereinrichtung weg reflektiert werden.

4. System nach Anspruch 1, 2 oder 3, wobei die Ultraschallreflektoren (11—15) zueinander im gleichen Abstand angeordnet sind.

5. System nach wenigstens einem der Ansprüche 1—4, wobei die horizontale Ausdehnung eines Ultraschallreflektors (11—15) um so länger ist, je weiter der Ultraschallreflektor von der Wandlereinrichtung (20) entfernt ist.

6. System nach Anspruch 2 oder wenigstens einem der Ansprüche 3—5 zusammen mit Anspruch 2, wobei der Radius der Krümmung von jeder der konkaven Oberflächen der Reflektoren (11—15) konstant ist.

7. System nach Anspruch 2 oder wenigstens einem der Ansprüche 3—5 zusammen mit Anspruch 2, wobei der Radius der Krümmung der konkaven Oberfläche von jedem der Ultraschallreflektoren (11—15) gleich dem Abstand des Reflektors zu der Wandlereinrichtung (20) ist.

8. System nach wenigstens einem der Ansprüche 1—7, wobei die die Transmission bewirkende und Daten empfangende Einrichtung enthält:
(i) einen Datenprozessor (200);
(ii) einen Impulsgeber (210), der mit dem Datenprozessor (220) verbunden ist, um zu bewirken, daß die Wandlereinrichtung (20) Ultraschallenergie in die Flüssigkeit (50) überträgt;
(ii) eine Signalerfassungsschaltung (220—240) für den Empfang der Datensignale von der Wandlereinrichtung (20) und zum Anzeigen, ob eine Reflexion der übertragenen Energie durch die Wandlereinrichtung (20) innerhalb eines vorbestimmten Zeitfensters empfangen wurde; und
(iv) einen Timer (250), der mit dem Datenprozessor und der Signalerfassungsschaltung (220—240) verbunden ist, um die Zeit zwischen der übertragung von Ultraschallenergie und dem Empfang von Reflexionen der übertragenen Energie innerhalb des vorbestimmten Zeitfensters zu messen.

9. System nach Anspruch 8, wobei die Signalerfassungsschaltung (220—240) eine Einrichtung zur Gewährleistung einer variablen Empfindlichkeit aufweist, die eine wesentliche Verbesserung der Diskriminierung zwischen den Datensignalen, die von den Reflektoren empfangen werden, und den Datensignalen, die von der Oberfläche der Flüssigkeit empfangen werden, ermöglicht.

10. System nach Anspruch 8 oder 9, wobei der Impulsegeber (210) in der Lage ist, zu bewirken, daß die Wandlereinrichtung (20) Ultraschallenergie mit variabler Amplitude überträgt, um die Datensignaldiskriminierung des Systems zu verbessern.

11. System nach wenigstens einem der vorhergehenden Ansprüche, wobei das Meßsignal repräsentativ für die Höhe der ersten Flüssigkeit (50) in dem Tank (5) ist.

12. System nach wenigstens einem der vorhergehenden Ansprüche, das eine Einrichtung für die Bestimmung der Mengen der ersten und zweiten Flüssigkeit in dem Tank (5) enthält.

13. Verwendung eines Tanküberwachungssystems nach wenigstens einem der vorhergehenden Ansprüche in einem Verfahren zur Bestimmung der Menge von wenistens der ersten Flüssigkeit in dem Tank, wobei das Verfahren die Verfahrensschritte umfaßt:

(a) Übertragen periodischer Impulsserien von der Wandlereinrichtung (20) in Richtung zu der Oberfläche der ersten Flüssigkeit (50);

(b) Messen einer Oberflächenecho-Verzögerungszeit zwischen der übertragung eines ersten Satzes von Impulsserien und dem Empfang der Reflexionen des ersten Satzes von Impulsserien von der Oberfläche der ersten Flüssigkeit (50);

(c) Messen einer Refkeltorecho-Verzögerungszeit für jeden aus der Vielzahl von Ultraschallreflektoren (11—15), welche unterhalb der Oberfläche der ersten Flüssigkeit (50) versenkt ist, wobei die Reflektorecho-Verzögerungszeit von jedem Reflektor die Zeit zwischen der Übertragung eines Satzes von Impulsserien und dem Empfang der Reflexionen des Satzes von Impulsserien durch den Reflektor ist;

(d) Berechnen einer mittleren Geschwindigkeit des Schalls in der ersten Flüssigkeit (5) aus der Reflektorecho-Verzögerungszeit und aus den bekannten Abständen der Vielzahl von versenkten Reflektoren (11—14) zu der Wandlereinrichtung (20); und

(e) Berechnen der Höhe der ersten Flüssigkeit (5) in dem Tank (5) aus der mittleren Schallgeschwindigkeit und der Oberflächenecho-Verzögerungszeit.

14. Verwendung nach Anspruch 13, wobei der Verfahrensschritt der Messung der Reflektorecho-Verzögerungszeiten den Verfahrensschritt der Messung einer kleinsten Reflektorecho-Verzögerungszeit zwischen der Übertragung eines zweiten Satzes von Impulsserien und dem Empfang der Reflexionen des zweiten Satzes von Impulsserien in einem vorbestimmten Fenster von einem aus der Vielzahl von Reflektoren (11—15), der am nächsten bei der Wandlereinrichtung (20) liegt, enthält.

15. Verwendung nach Anspruch 14, wobei der Verfahrensschritt der Messung der Reflektorecho-Verzögerungszeiten für jeden anderen versenkten Reflektor (12—14) als den Reflektor (11), der der Wandlereinrichtung am nächsten liegt, die Verfahrensschritte enthält:

(i) Abschätzen der Reflektorecho-Verzögerungszeit anhand der Echoverzögerungszeit, die für den Reflektor (11) gemessen wird, der unmittelbar näher zu der Wandlereinrichtung (20) angeordnet ist; und

(ii) Erfassen der Reflektionen in einem Zeitfenster, das die geschätzte Echoverzögerungszeit umgibt.

16. Verwendung nach Anspruch 13, 14 oder 15, wobei der Verfahrensschritt der Berechnung einer mittleren Schallgeschwindigkeit den Verfahrensschritt der Teilung der Distanz des versenkten Reflektors (14), der am weitesten von der Wandlereinrichtung (20) entfernt angeordnet ist, durch die Hälfte der Echoverzögerungszeit für den am weitesten entfernten versenkten Reflektor (14) enthält.

17. Verwendung nach wenigstens einem der Ansprüche 13—16, wobei der Verfahrensschritt der Messung der Oberflächenecho-Verzögerungszeit die Verfahrensschritte enthält:

(i) Einstellen eines Ultraschallempfängers auf eine vorbestimmte Empfindlichkeit;

(ii) Einregeln der Empfindlichkeit des Empfängers, bis eine erste Reflexion des ersten Satzes von periodischen Impulsserien erfaßt wird;

(iii) Einstellen der Zeit zwischen der Erfassung der ersten Reflexion und der Übertragung der einen von den Impulsserien, welche reflektiert wurde, um die erste Reflexion zu bilden, als einen ersten Wert für die Oberflächen-Verzögerungszeit;

(iv) Einstellen der Empfindlichkeit und Messen nachfolgender Echoverzögerungszeiten zwischen der Erfassung von Reflexionen und der Übertragung der Impulsserien, die die Reflexionen hervorrufen;

(v) Messen einer Echoverzögerungszeitdifferenz zwischen der jüngst gemessenen Echoverzögerungszeit und der nächstjüngst gemessenen Echoverzögerungszeit;

(vi) Festsetzen der jüngst gemessenen Echoverzögerungszeit als neuen Wert für die Oberflächenecho-Verzögerungszeit, wenn die Echoverzögerungszeitdifferenz gleich einer Periode der Impulse in der Serie ist;

(vii) weiteres Einstellen der Empfindlichkeit, wenn die Echoverzögerungszeitdifferenz kleiner als eine oder gleich einer Periode der Impulse in der Serie ist;

(viii) Beenden der Messung der Echoverzögerungszeit, wenn die Empfindlichkeit bei einer vorbestimmten Grenze liegt; und

(ix) Auswählen der nächstjüngst gemessenen Echoverzögerungszeit als die Oberflächenecho-Verzögerungszeit, wenn die Echoverzögerungszeitdifferenz eine Periode von einem der Impulse in der Serie überschreitet.

18. Verwendung nach Anspruch 17, wobei:

der Verfahrensschritt der Einstellung des Ultraschallempfängers auf eine vorbestimmte Empfindlichkeit den Verfahrensschritt der Einstellung der Schwelle des Empfängers auf einen vorbestimmten Schwellenwert enthält;

die Verfahrensschritte der Einstellung der Empfindlichkeit den Verfahrensschritt der Vergrößerung der Schwelle des Empfängers enthalten; und

der Verfahrensschritt der Beendigung der Messung den Verfahrensschritt der Beendigung der Messung, wenn die Empfängerschwelle bei einem vorbestimmten Minimalwert liegt, enthält.

19. Verwendung nach Anspruch 17 oder 18, wobei:

der Verfahrensschritt der Einstellung des Ultraschallempfängers auf eine vorbestimmte Empfindlichkeit den Verfahrensschritt der Einstellung der Verstärkung des Empfängers auf einen vorbestimmten Wert enthält;

die Verfahrensschritte der Einstellung der Empfindlichkeit den Verfahrensschritt der Erhöhung der Verstärkung des Empfängers enthalten; und

der Verfahrensschritt der Beendigung der Messung den Verfahrensschritt der Beendigung der Messung, wenn die Empfängerverstärkung einen vorbestimmten Maximalwert aufweist, enthält.

20. Verwendung nach Anspruch 17, 18 oder 19, wobei:

der Verfahrensschritt der Einstellung des Ultraschallempfängers auf eine vorbestimmte Empfindlichkeit den Verfahrensschritt der Einstellung der Verstärkung des Wandlers, der Impulse von einem vorbestimmten Wert überträgt, enthält;

die Verfahrensschritte der Einstellung der Empfindlichkeit den Verfahrensschritt der Erhöhung der Verstärkung der Wandlereinrichtung (20) enthält; und

der Verfahrensschritt der Beendigung der Messung den Verfahrensschritt der Beendigung der Messung, wenn die Wandlerverstärkung einen vorbestimmten Maximalwert aufweist, enthält.

21. Verwendung nach Anspruch 15 zusammen mit wenigstens einem der Ansprüche 17—20, wobei der Verfahrensschritt der Messung der kleinsten Reflektorecho-Verzögerungszeit die Verfahrensschritte enthält:

(i) Einregeln der Empfindlichkeit des Empfängers von einem vorbestimmten Niveau aus, bis eine Reflexion in dem vorbestimmten Fenster empfangen wird; und

(ii) Messen von Echoverzögerungszeiten des nächstliegenden Reflektors, während die Empfindlichkeit des Empfängers eingestellt wird, bis sich die jüngst gemessene Echoverzögerungszeit von der nächstjüngst gemessenen Echoverzögerungszeit um mehr als die Periode von einem der Impulse in der Serie unterscheidet, wobei die kleinste Reflektorecho-Verzögerungszeit die nächstjüngste gemessene Echoverzögerungszeit ist.

22. Verwendung nach Anspruch 21, wobei der Verfahrensschritt der Messung der Reflektorecho-Verzögerungszeit von der Vielzahl von Reflektoren die folgenden Verfahrensschritte für jeden aus der Vielzahl von Reflektoren enthält:

(a) Einregeln der Empfindlichkeit des Empfängers von einem vorbestimmten Minimalniveau aus, bis eine Reflexion empfangen wird, die ungefähr gleich der geschätzten Reflektorecho-Verzögerungszeit, nachdem eine Impulsserie übertragen ist, ist; und

(b) Messen von Echoverzögerungszeiten der Reflektoren, während die Empfindlichkeit des Empfängers eingestellt wird, bis sich die jüngst gemessene Echoverzögerungszeit von der nächstjüngst gemessenen Echoverzögerungszeit um mehr als die Periode von einem der Impulse in der Serie unterscheidet, wobei die Reflektorecho-Verzögerungszeit die nächstjüngst gemessene Echoverzögerungszeit ist.

23. Verwendung nach Anspruch 22, wobei der Verfahrensschritt der Einstellung der Schwelle des Empfängers den Verfahrensschritt des Suchens nach einer Reflexion in einem Fenster, das um die geschätzte Echoverzögerungszeit zentriert ist, enthält.

24. Verwendung nach Anspruch 23, wobei der Verfahrensschritt der Messung von Echoverzögerungszeiten die Verfahrensschritte enthält:

(a) Wiederholen der Messung der Echoverzögerungszeit eine vorbestimmte Anzahl von Malen; und

(b) Mitteln der Echoverzögerungszeitmessungen, um die gewünschte Echoverzögerungszeit zu erhalten.

25. Verwendung nach Anspruch 22, wobei der Verfahrensschritt der Schätzung der Echoverzögerungszeit von jeder aus der Vielzahl von Reflektoren für jeden der Reflektoren die Verfahrensschritte enthält:

(a) Bestimmen einer Proportionalitätskonstanten, die gleich dem Verhältnis von einem gespeicherten, geschätzten Wert für die Reflektorecho-Verzögerungszeit für den zur Wandlereinrichtung unmittelbar nächstliegenden Reflektor und der gemessenen Echoverzögerungsziet für den Reflektor, der der Wandlereinrichtung unmittelbar am nächsten liegt, ist, und

(b) Muliplizieren der Proportionalitätskonstanten mit einem gespeicherten, geschätzten Wert für die Reflektorecho-Verzögerungszeit für den Reflektor, dessen Echoverzögerungszeit geschätzt worden ist.

26. Verwendung nach wenigstens einem der Ansprüche 13—25, wobei weiterhin der Verfahrensschritt der Bestimmung des Volumens der ersten Flüssigkeit in dem Tank aus der ermittelten Höhe und den Abmessungen des Tanks vorgesehen ist.

27. Verwendung nach Anspruch 26, wobei weiterhin die Verfahrensschritte enthalten sind:

Bestimmen der mittleren Temperatur der Flüssigkeit in dem Tank; und

Normieren des bestimmten Volumens der Flüssigkeit auf eine Referenztemperatur unter Verwendung der mittleren Temperatur.

28. Verwendung nach Anspruch 27, wobei der Verfahrensschritt der Bestimmung der mittleren Temperatur der Flüssigkeit im Tank weiterhin die Verfahrensschritte enthält:

(a) Messen der mittleren Schallgeschwindigkeit der Flüssigkeit in dem Tank;

(b) Bestimmen einer Referenzschallgeschwindigkeit $V_R$ in der Flüssigkeit, bei einer Referenztemperatur $T_R$ der Flüssigkeit und einer Verhältniszuordnung zwischen einer Veränderung der Temperatur und einer Veränderung der Schallgeschwindigkeit der Flüssigkeit $\Delta v/\Delta T$; und

(c) Bestimmen der mittleren Temperatur der Flüssigkeit aus $V_R$, $T_R$ und $\Delta v/\Delta T$.

29. Verwendung nach Anspruch 28, wobei der Verfahrensschritt der Bestimmung von $V_R$, $T_R$ und $\Delta v/\Delta T$ die Verfahrensschritte enthält:

(a) Messen der Geschwindigkeit des Schalls durch einen Teil der Flüssigkeit in periodischen Intervallen; und

(b) Messen der Temperatur des Teils der Flüssigkeit bei jeder Schallgeschwindigkeitsmessung.

30. Verwendung nach Anspruch 29, wobei der Verfahrensschritt der Messung der Schallgeschwindigkeit in einem Teil der Flüssigkeit die Verfahrensschritte der Messung der Schallgeschwindigkeit zwischen einem Wandler und einem untersten Reflektor, der nahe genug bie der Wandlereinrichtung angeordnet ist, so daß die Temperatur der Flüssigkeit zwischen dem Reflektor und der Wandlereinrichtung relativ konstant ist, enthält.

31. Verwendung nach Anspruch 28 oder 29, wobei der Verfahrensschritt der Bestimmung der mittleren Temperatur $T_{av}$ der Flüssigkeit den Verfahrensschritt der Berechnung der mittleren Temperatur aus der Gleichung:

$$T_{av} = (\text{Schallgeschwindigkeit in der Flüssigkeit} - V_R)/(\Delta V/\Delta T) + T_R$$

enthält.

32. Verwendung nach wenigstens einem der Ansprüche 13—31, wobei der Tank (5) die erste und zweite Flüssigkeit enthält, und das Verfahren weiterhin die Bestimmung der Höhe der zweiten Flüssigkeit sowie die Verfahrensschritte umfaßt:

(a) Übertragen, von der Wandlereinrichtung (20), die unterhalb der Oberfläche der ersten Flüssigkeit (50) und oberhalb der Grenzfläches von der ersten zu der zweiten Flüssigkeit angeordnet ist, einer periodischen Serie von Ultraschallimpulsen in Richtung auf die Oberfläche der ersten Flüssigkeit (50);

(b) Messen der kombinierten Höhe der ersten und zweiten Flüssigkeit in dem Tank (5) unter Verwendung der Impulsserien;

(c) Messen der Echoverzögerungszeit von der Grenzfläche für einen ersten Satz von Impulsserien, die von der Wandlereinrichtung (20) ausgehen, von der Oberfläche der ersten Flüssigkeit (50) ein erstes Mal reflektiert werden, von der Grenzfläche reflektiert werden, von der Oberfläche der ersten Flüssigkeit (50) ein zweites Mal reflektiert und von der Wandlereinrichtung (20) empfangen werden; und

(d) Bestimmen der Höhe der ersten Flüssigkeit (50) über der Grenzschicht und der Höhe der zweiten Flüssigkeit aus der Grenzflächen-Echoverzögerungszeit und der kombinierten Höhe.

33. Verwendung nach Anspruch 32, wobei weiterhin der Verfahrensschritt der Bestimmung des Volumens der zweiten Flüssigkeit aus der gemessenen Höhe der zweiten Flüssigkeit und den Tankabmessungen enthalten ist.

34. Verwendung nach Anspruch 33, wobei der Verfahrensschritt der Messung der kombinierten Höhe der ersten und zweiten Flüssigkeit in dem Tank (5) die Verfahrensschritte enthält:

(i) Messen einer Oberflächenecho-Verzögerungszeit zwischen der Transmission eines zweiten Satzes von Impulsserien und dem Empfang der Reflexionen des zweiten Satzes von Serien von der Oberfläche der ersten Flüssigkeit (50);

(ii) Messen einer Reflektorecho-Verzögerungszeit für jeden der versenkten Reflektoren von der Vielzahl von Reflektoren (11—15), wobei die Reflektorecho-Verzögerungszeit für jeden Reflektor (11—14) die Zeit zwischen der Transmission eines Satzes von Impulsserien und dem Empfang der Reflexion des Satzes von Impulsserien durch den Reflektor ist;

(iii) Berechnen einer mittleren Geschwindigkeit des Schalls durch die erste und zweite Flüssigkeit in dem Tank (5) aus den Reflektorecho-Verzögerungszeiten und aus den Abständen der Wandlereinrichtung (20) zu der Vielzahl von versenkten Reflektoren (11—14); und

(iv) Berechnen der kombinierten Höhe der ersten und zweiten Flüssigkeit aus der mittleren Schallgeschwindigkeit und der Oberflächenecho-Verzögerungszeit.

35. Verwendung nach wenigstens einem der Ansprüche 13—34, wobei die erste Flüssigkeit Benzin und die zweite Flüssigkeit, wenn vorhanden, Wasser ist.

**Revendications**

1. Système de contrôle de réservoir comportant:

un réservoir (5) qui contient un premier liquide (50);

des moyens transducteurs d'ultrasons (20) montés à proximité du fond du réservoir (5), les moyens transducteurs (20) étant conçus pour transmettre une énergie ultrasonique dans ledit premier liquide (50) situé au-dessus d'eux, pour recevoir des réflexions de ladite énergie transmise, à partir de la surface dudit premier liquide (50), et pour élaborer des signaux de données représentatifs desdites réflexions;

de multiples réflecteurs d'ultrasons (11—15) disposés à l'intérieur du réservoir (50) en étant placés à des distances prédéterminées les uns des autres et au-dessus desdits moyens transducteurs, de telle façon que chacun des réflecteurs (11—15) se trouve à une hauteur prédéterminée différente dans le réservoir (5) et est apte à opérer pour, lorsqu'il est situé au-dessous de la surface dudit premier liquide (50), réfléchir ladite énergie transmise, en direction desdits moyens transducteurs (20) qui élaborent alors ensuite lesdits signaux de données représentatifs des réflexions de ladite énergie transmise, à partir desdits réflecteurs (11—15); et

des moyens (30) pour obliger lesdits moyens transducteurs (20) à transmettre une énergie ultrasonique, pour recevoir lesdits signaux de données provenant desdits moyens transducteurs (20), et pour dériver de ceux-ci un signal de mesure;

caractérisé en ce que lesdits moyens transducteurs (20) sont positionnés à l'intérieur du réservoir à une distance prédéterminée au-dessus du fond du réservoir (5), de façon qu'une couche d'un second liquide plus dense et non miscible avec le premier liquide (50), puisse se situer au-dessous du niveau des moyens transducteurs (20).

2. Système selon la revendication 1, dans lequel l'un au moins desdits réflecteurs d'ultrasons (11—15) présente une surface inférieure concave pour renvoyer à partir de celle-ci auxdits moyens transducteurs (20) d'une manière convergente des réflexions de ladite énergie transmise.

3. Système selon la revendication 1 ou 2, dans lequel lesdits réflecteurs d'ultrasons (11—15) sont alignés verticalement; les surfaces supérieures desdits réflecteurs étant biseautées pour faire en sorte que les ondes ultrasonores heurtant lesdites surfaces biseautées soient réfléchies à distance desdits réflecteurs et desdits moyens transducteurs.

4. Système selon la revendication 1, 2 ou 3, dans lequel lesdits moyens réflecteurs d'ultrasons (11—15) sont espacés d'une distance égale les uns des autres.

5. Système selon l'une quelconque des revendications 1 à 4, dans lequel plus un réflecteur d'ultrasons (11—15) est éloigné desdits moyens transducteurs (20), plus sa dimension horizontale est longue.

6. Système selon la revendication 2 ou l'une quelconque des revendications 3 à 5, considérée conjointement avec la revendication 2, dans lequel le rayon de courbure de chacunes desdites surfaces concaves desdits réflecteurs (11—15) est constant.

7. Système selon la revendication 2 ou l'une quelconque des revendications 3 à 5, considérée conjointement avec la revendication 2, dans lequel le rayon de courbure de ladite surface concave de chacun desdits réflecteurs d'ultrasons (11—15) est égal à la distance de ce réflecteur par rapport auxdits moyens transducteurs (20).

8. Système selon l'une quelconque des revendications 1 à 7, dans lequel lesdits moyens pour provoquer une transmission et recevoir des données comportent:

(i) un organe de traitement de données (200);

(ii) un générateur d'impulsions (210) relié audit organe de traitement de données (200) pour obliger lesdits moyens transducteurs (20) à transmettre une énergie ultrasonique dans ledit liquide (50);

(iii) un ensemble de circuits de détection de signaux (220—240) pour recevoir lesdits signaux de données provenant desdits moyens transducteurs (20) et pour indiquer si une réflexion de ladite énergie transmise a été reçue par lesdits moyens transducteurs (20) dans les limites d'une fenêtre de temps prédéterminée; et

(iv) une horloge (250) reliée audit organe de traitement de données (200) et audit ensemble de circuits de détection de signaux (220—240) pour mesurer le temps écoulé entre la transmission d'énergie ultrasonique et la réception, dans les limites de ladite fenêtre de temps prédéterminée, de réflexions de ladite énergie transmise.

9. Système selon la revendication 8, dans lequel ledit ensemble de circuits de détection de signaux (220—240) comporte des moyens à sensibilité variable aptes à opérer pour améliorer sensiblement la discrimination entre des signaux de données reçus à partir desdits réflecteurs, et des signaux de données reçus à partir de la surface dudit liquide.

10. Système selon la revendication 8 ou 9, dans lequel lesdit générateur d'impulsions (210) est apte à opérer pour obliger lesdits moyens transducteurs (20) à transmettre une énergie ultrasonique ayant une amplitude variable, en vue d'améliorer la discrimination de signaux de données dudit système.

11. Système selon l'une quelconque des revendications précédentes, dans lequel ledit signal de mesure est représentatif de la hauteur dudit premier liquide (50) contenu dans le réservoir (5).

12. Système selon l'une quelconque des revendications précédentes, comportant des moyens pour déterminer les quantités desdits premier et second liquides contenus dans le réservoir (5).

13. Utilisation d'un système de contrôle de réservoir selon l'une quelconque des revendications précédentes dans un procédé pour déterminer la quantité au moins dudit premier liquide contenu dans ledit réservoir, le procédé comportant les étapes qui consistent à:

(a) transmettre à partir desdits moyens transducteurs (20) des giclées d'impulsions périodiques en direction de la surface dudit premier liquide (50);

(b) mesurer un temps de retard d'écho de surface entre la transmission d'une première série de giclées d'impulsions et la réception des réflexions de ladite première série de giclées, à partir de ladite surface dudit premier liquide (50);

(c) mesurer un temps de retard d'écho de réflecteur pour chacun desdits multiples réflecteurs d'ultrasons (11—15), immergé au-dessous de ladite surface dudit premier liquide (50), le temps de retard d'écho de réflecteur de chaque réflecteur correspondant au temps écoulé entre la transmission d'une série de giclées d'impulsions et la réception des réflexions de celle-ci à partir de ce réflecteur;

(d) calculer une vitesse moyenne de propagation du son dans ledit premier liquide (50) à partir desdits temps de retard d'écho de réflecteur et des distances connues desdits multiples réflecteurs immergés (11—14) par rapport auxdits moyens transducteurs (20); et

(e) calculer la hauteur dudit premier liquide (50) contenu dans ledit réservoir (5) à partir de ladite vitesse moyenne de propagation du son et dudit temps de retard d'écho de surface.

14. Utilisation selon la revendication 13, dans laquelle l'étape de mesure desdits temps de retard d'écho de réflecteur comporte l'étape qui consiste à mesurer un temps de retard d'écho du réflecteur le plus proche entre la transmission d'une seconde série de giclées d'impulsions et la réception dans une fenêtre prédéterminée des réflexions de ladite seconde série de giclées d'impulsions à partir de celui desdits multiples réflecteurs (11—15) qui se trouve le plus proche desdits moyens transducteurs (20).

15. Utilisation selon la revendication 14, dans laquelle l'étape de mesure desdits temps de retard d'écho de réflecteur comporte, pour chacun des réflecteurs immergés (12—14) autres que ledit réflecteur (11) qui se trouve le plus proche desdits moyens transducteurs (20), les étapes qui consistent à:

(i) estimer un temps de retard d'écho de réflecteur à partir du temps de retard d'écho mesuré pour le réflecteur (11) situé le plus près immédiatement desdits moyens transducteurs (20); et

(ii) détecter des réflexions dans une fenêtre de temps encadrant ledit temps de retard d'écho estimé.

16. Utilisation selon la revendication 13, 14 ou 15, dans laquelle l'étape de calcul d'une vitesse moyenne de propagation du son comporte l'étape qui consiste à diviser la distance du réflecteur immergé (14) le plus éloigné desdits moyens transducteurs (20) par la moitié du temps de retard d'écho correspondant audit réflecteur immergé le plus éloigné (14).

17. Utilisation selon l'une quelconque des revendications 13 à 16, dans laquelle l'étape de mesure dudit temps de retard d'écho de surface comporte les étapes qui consistent à:

(i) régler un récepteur d'ultrasons sur une sensibilité prédéterminée;

(ii) ajuster la sensibilité dudit récepteur jusqu'à ce qu'une première réflexion de ladite première série de giclées d'impulsions périodiques soit détectée;

(iii) définir, comme première valeur dudit temps de retard d'écho de surface, le temps écoulé entre la détection de ladite première réflexion et la transmission de celle desdites giclées d'impulsions qui a été réfléchie pour former ladite première réflexion;

(iv) ajuster la sensibilité et mesurer les temps de retard d'écho ultérieurs entre la détection des réflexions et la transmission des giclées d'impulsions provoquant lesdites réflexions;

(v) mesurer une différence de temps de retard d'écho entre le temps de retard d'écho mesuré le plus récemment et le temps de retard d'écho mesuré le plus récemment suivant;

(vi) assigner le temps de retard d'écho mesuré le plus récemment comme nouvelle valeur dudit temps de retard d'écho de surface si ladite différence de temps de retard d'écho est égale à une seule période desdites impulsions de ladite giclée;

(vii) continuer à ajuster la sensibilité si la différence de temps de retard d'écho est inférieure ou égale à une seule période desdites impulsions de ladite giclée;

(viii) terminer la mesure dudit temps de retard d'écho si ladite sensibilité se situe à une limite prédéterminée; et

(ix) choisir comme temps de retard d'écho de surface le temps de retard d'écho mesuré le plus récemment suivant, si ladite différence de temps de retard d'écho est supérieure à une seule période de l'une desdites impulsions de ladite giclée.

18. Utilisation selon la revendication 17, dans laquelle:

l'étape de réglage dudit récepteur d'ultrasons sur une sensibilité prédéterminée comporte l'étape qui consiste à régler le seuil dudit récepteur sur une valeur de seuil prédéterminée;

les étapes d'ajustement de la sensibilité comportent l'étape qui consiste à augmenter le seuil dudit récepteur; et

l'étape de terminaison de la mesure comporte l'étape qui consiste à terminer la mesure lorsque le seuil du récepteur se situe à une valeur minimale prédéterminée.

19. Utilisation selon la revendication 17 ou 18, dans laquelle:

l'étape de réglage dudit récepteur d'ultrasons sur une sensibilité prédéterminée comporte l'étape qui consiste à régler le gain dudit récepteur sur une valeur prédéterminée;

les étapes d'ajustement de la sensibilité comportent l'étape qui consiste à augmenter le gain dudit récepteur; et

l'étape de terminaison de la mesure comporte l'étape qui consiste à terminer la mesure lorsque le gain du récepteur se situe à une valeur maximale prédéterminée.

20. Utilisation selon la revendication 17, 18 ou 19, dans laquelle:

l'étape de réglage dudit récepteur d'ultrasons sur une sensibilité prédéterminée comporte l'étape qui consiste à régler le gain dudit transducteur qui transmet des impulsions sur une valeur prédéterminée;

les étapes d'ajustement de la sensibilité comportent l'étape qui consiste à augmenter le gain desdits moyens transducteurs (20); et

l'étape de terminaison de la mesure comporte l'étape qui consiste à terminer la mesure lorsque le gain du transducteur se situe à une valeur maximale prédéterminée.

21. Utilisation selon la revendication 15 considérée conjointement avec l'une quelconque des revendications 17 à 20, dans laquelle l'étape de mesure du temps de retard d'écho du réflecteur le plus proche comporte les étapes qui consistent à:

(i) ajuster la sensibilité dudit récepteur à partir d'un niveau prédéterminé jusqu'à reception d'une réflexion dans ladite fenêtre prédéterminée; et

(ii) mesurer des temps de retard d'écho dudit réflecteur le plus proche, lorsque la sensibilité dudit récepteur est adjustée, jusqu'à ce que le temps de retard d'écho mesuré le plus récemment diffère du temps de retard d'écho mesuré le plus récemment suivant, d'une valeur suspérieure à la période de l'une desdits impulsions desdites giclées, ledit temps de retard d'écho du réflecteur le plus proche étant le temps de retard de d'écho mesuré le plus récemment suivant.

22. Utilisation selon la revendication 21, dans laquelle l'étape de mesure des temps de retard d'écho de réflecteur desdits multiples réflecteurs comporte, pour chacun de ces derniers, les étapes suivantes qui consistent à:

(a) ajuster la sensibilité dudit récepteur à partir d'un niveau minimal prédéterminé jusqu'à réception d'une réflexion approximativement égale au temps de retard d'écho de réflecteur estimé après transmission d'une giclée d'impulsions; et

(b) mesurer des temps de retard d'écho dudit réflecteur, lorsque la sensibilité dudit récepteur est ajustée, jusqu'à ce que le temps de retard d'écho mesuré le plus récemment diffère du temps de retard d'écho mesuré le plus récemment suivant, d'une valeur supérieure à la période de l'une desdites impulsions desdites giclées, ledit temps de retard d'écho de réflecteur étant le temps de retard d'écho mesuré le plus récemment suivant.

23. Utilisation selon la revendication 22, dans laquelle l'étape d'ajustement de seuil dudit récepteur comporte l'étape qui consiste à rechercher une réflexion dans une fenêtre centrée sur ledit temps de retard d'écho estimé.

24. Utilisation selon la revendication 23, dans laquelle l'étape de mesure des temps de retard d'écho comporte les étapes qui consistent à:

(a) répéter la mesure de temps de retard d'écho un nombre de fois prédéterminé; et

(b) établir la moyenne desdites mesures de temps de retard d'écho pour obtenir le temps de retard d'écho voulu.

25. Utilisation selon la revendication 22, dans laquelle l'étape d'estimation du temps de retard d'écho de chacun desdits multiples réflecteurs comporte, pour chacun desdits réflecteurs, les étapes qui consistent à:

(a) déterminer une constante de proportionnalité égale au rapport d'une valeur estimée mémorisée correspondant au temps de retard d'écho de réflecteur du réflecteur le plus proche immédiatement desdits moyens transducteurs, et du temps de retard d'écho mesuré de celui-ci; et

(b) multiplier ladite constante de proportionnalité par une valeur estimée mémorisée correspondant au temps de retard d'écho de réflecteur du réflecteur dont le temps de retard d'écho est en train d'être estimé.

26. Utilisation selon l'une quelconque des revendications 13 à 25, comportant également l'étape qui consiste à déterminer le volume dudit premier liquide contenu dans ledit réservoir, à partir de ladite hauteur déterminée et des dimensions dudit réservoir.

27. Utilisation selon la revendication 26, comportant en outre les étapes qui consistent à:

déterminer la température moyenne dudit liquide contenu dans ledit réservoir; et

ramener le volume déterminé dudit liquide à une température de référence en utilisant ladite température moyenne.

28. Utilisation selon la revendication 27, dans laquelle l'étape de détermination de la température moyenne d'un liquide contenu dans ledit réservoir comporte étalement les étapes qui consistent à:

(a) mesurer la vitesse moyenne de propagation du son dudit liquide contenu dans ledit réservoir;

(b) déterminer une vitesse de référence $V_R$ de propagation du son dans ledit liquide à une température de référence $T_R$ dudit liquide, et une correspondance relationnelle entre une variation de la température et une variation de la vitesse de propagation du son dudit liquide $\Delta V/\Delta T$; et

(c) déterminer la température moyenne dudit liquide à partir de $V_R$, $T_R$ et $\Delta V/\Delta T$.

29. Utilisation selon la revendication 28, dans laquelle l'étape de déterimination de $V_R$, $T_R$ et $\Delta V/\Delta T$ comporte les étapes qui consistent à:

(a) mesurer la vitesse de propagation du son à travers une partie dudit liquide à des intervalles périodiques; et

(b) mesurer la température de ladite partie dudit liquide à chaque mesure de vitesse de propagation du son.

30. Utilisation selon la revendication 29, dans laquelle l'étape de mesure de la vitesse de propagation du son dans une partie dudit liquide comporte les étapes qui consistent à mesurer la vitesse de propagation du son entre un transducteur et une réflecteur extrême inférieur situé suffisamment près desdits moyens transducteurs, de façon que la température dudit liquide entre ledit réflecteur et lesdits moyens transducteurs soit relativement constante.

31. Utilisation selon la revendication 28 ou 29, dans laquelle l'étape de détermination de la température moyenne $T_{av}$ dudit liquide comporte l'étape qui consiste à calculer une température moyenne à partir de l'équation:

$$T_{av}=(\text{vitesse de propagation du son dans ledit liquide}-V_R)/(\Delta V/\Delta T)+T_R.$$

32. Utilisation selon l'une quelconque des revendications 13 à 31, dans laquelle ledit réservoir (5) contient lesdits premier et second liquides, ledit procédé consistant également à déterminer la hauteur dudit second liquide, et comportant les étapes qui consistent à:

(a) transmettre, à partir desdits moyens transducteurs (20) situés au-dessous de la surface dudit premier liquide (50) et au-dessus de l'interface desdits premier et second liquides, une giclée périodique d'impulsions ultrasoniques en direction de la surface dudit premier liquide (50);

(b) mesurer la hauteur cumulée desdits premier et second liquides contenus dans ledit réservoir (5) à l'aide desdites giclées d'impulsions;

(c) mesurer le temps de retard d'écho à partir de ladite interface, d'une première série de giclées d'impulsions pour se propager à partir desdits moyens transducteurs (20), pour se réfléchir une première fois sur ladite surface dudit premier liquide (50), pour se réfléchir sur ladite interface, pour se réflechir une seconde fois sur ladite surface dudit premier liquide (50), et pour être reçue par lesdits moyens transducteurs (20); et

(d) déterminer à partir dudit temps de retard d'écho d'interface et de ladite hauteur cumulée, la hauteur dudit premier liquide (50) au-dessus de ladite interface, et la hauteur dudit second liquide.

33. Utilisation selon la revendication 32, comportant en outre l'étape qui consiste à déterminer le volume dudit second liquide à partir de la hauteur mesurée de celui-ci et des dimensions du réservoir.

34. Utilisation selon la revendication 33, dans laquelle l'étape de mesure de la hauteur cumulée desdts premier et second liquides contenus dans ledit réservoir (5) comporte les étapes qui consistent à:

(i) mesurer un temps de retard d'écho de surface entre la transmission d'une second série de giclées d'impulsions et la réception des réflexions de ladite seconde série de giclées à partir de ladite surface dudit premier liquide (50);

(ii) mesurer un temps de retard d'écho de réflecteur pour chacun de ceux desdits multiples réflecteurs (11—15) qui sont immergés, le temps de retard d'écho de réflecteur de chacun des réflecteurs (11—14) correspondant au temps écoulé entre la transmission d'une série de giclées d'impulsions et la réception de la réflexion de celle-ci à partir de ce réflecteur;

(iii) calculer une vitesse moyenne de propagation du son à travers lesdits premier et second liquides contenus dans ledit réservoir (5) à partir desdits temps de retard d'écho de réflecteur et des distances desdits moyens transducteurs (20) par rapport auxdits multiples réflecteurs immergés (11—14); et

(iv) calculer la hauteur cumulée desdits premier et second liquides à partir de ladite vitesse moyenne de propagation du son et dudit temps de retard d'écho de surface.

35. Utilisation selon l'une quelconque des revendications 13 à 34, dans laquelle ledit premier liquide est de l'essence, ledit second liquide étant, le cas échéant, de l'eau.

FIG. 1.

SERVICE STATION
BUILDING

40

CONSOLE
30

COAX CABLE
25

CONDUIT
26

2

STAND PIPE COVER 8

STANDPIPE 6

PROBE 7

TANK 5

15

101

14

13

10

10'

12

11

50

22

60

20

EP 0 106 677 B1

FIG. 2a.

FIG. 2b.

FIG. 12.

## FIG. 2c.

## FIG. 3.

FIG. 4.

FIG. 5.

FIG. 6.

*FIG. 7.*

SET WINDOW FOR CLOSEST REFLECTOR FROM PREDETERMINED VALUE — 701

MEASURE $ET_c$ FROM REFLECTIONS RECEIVED IN WINDOW — 702

*FIG. 8.*

SET A WINDOW FOR THE NEXT REFLECTOR AROUND A VALUE EQUAL TO

$\left(\begin{array}{c}\text{ESTIMATED}\\ \text{ECHO DELAY}\\ \text{TIME FOR}\\ \text{NEXT}\\ \text{REFLECTOR}\end{array}\right)\left(\dfrac{\text{ECHO DELAY TIME}}{\begin{array}{c}\text{FOR LAST REFLECTOR}\\ \text{ESTIMATED ECHO}\\ \text{DELAY TIME FOR}\\ \text{LAST REFLECTOR}\end{array}}\right)$ — 801

MEASURE ECHO DELAY TIME FROM REFLECTIONS RECEIVED IN WINDOW — 802

*FIG. 9.*

SET THRESHOLD — 901

DECREASE THRESHOLD — 903

← NO ← ECHO RECEIVED IN WINDOW ? — 902

YES

RECEIVE NEXT ECHO — 915

YES ← FIRST ECHO REC'D ? — 910

RECORD MOST RECENTLY MEASURED ECHO DELAY TIME AS NEW VALUE FOR ECHO DELAY TIME — 911

= 
< ▢ 920
>

DIFFERENCE BETWEEN LAST TWO MEASURED ECHO DELAY TIMES: PULSE PERIOD

DECREASE THRESHOLD

914 — NO

MINIMUM THRESHOLD

YES

## FIG. 10.

```
ESTIMATE A WINDOW    1001
FOR RECEIVING
REFLECTIONS FROM
THE FUEL-WATER
INTERFACE
        |
        v
MEASURE IN THE       1002
ESTIMATED WINDOW,
THE ECHO DELAY TIME
FOR THE REFLECTIONS
OF THE FUEL-WATER
INTERFACE ET_FW
```

## FIG. 11.

```
ESTIMATE A WINDOW
FOR RECEIVING
REFLECTIONS OFF    1101
THE BOTTOM OF
THE TANK
        |
        v
MEASURE IN THE
ESTIMATED WINDOW,   1102
THE ECHO DELAY TIME
FOR THE REFLECTIONS OFF
THE BOTTOM OF THE TANK
ET_b
        |
        v
DETERMINE THE AVERAGE   1103
SOUND VELOCITY FOR
THE TANK AS
V_T = 2 H_L / (ET_b - ET_c)
```

## FIG. 15.

VELOCITY OF SOUND vs TEMPERATURE graph showing WATER and GASOLINE curves.

FIG. 13.

FIG. 14.

FIG. 16a.

STANDPIPE

TANK

PROBE

TEMPERATURE
SENSOR

FIG. 16b.

STANDPIPE

TANK

PROBE

TEMPERATURE
SENSOR

FIG. 16c.

STANDPIPE

TANK

PROBE

TEMPERATURE
SENSOR